# EUROPEAN PATENT APPLICATION

(11) **EP 4 772 485 A1**
(43) Date of publication of application: **08.07.2026**
(21) Application number: 24859138.0
(22) Date of filing: 28.06.2024
(51) Int. Cl.: C03C 27/06, E06B 3/677

(54) **METHOD FOR MANUFACTURING GLASS PANEL UNIT, AND CLIP**

(30) Priority: 31.08.2023 JP 2023141769
(71) Applicant: Panasonic Housing Solutions Co., Ltd., Kadoma-shi, Osaka 571-8686 (JP)
(72) Inventor: NONAKA, Masataka, Kadoma-shi, Osaka 571-0057 (JP); SHIMIZU, Takeshi, Kadoma-shi, Osaka 571-0057 (JP); HASEGAWA, Kazuya, Kadoma-shi, Osaka 571-0057 (JP); OTAKE, Shohei, Kadoma-shi, Osaka 571-0057 (JP); URIU, Eiichi, Kadoma-shi, Osaka 571-0057 (JP); ISHIBASHI, Tasuku, Kadoma-shi, Osaka 571-0057 (JP); KOSUGI, Naoki, Kadoma-shi, Osaka 571-0057 (JP); ABE, Hiroyuki, Kadoma-shi, Osaka 571-0057 (JP); YAMAGUCHI, Ayanori, Kadoma-shi, Osaka 571-0057 (JP)
(74) Representative: Müller-Boré & Partner Patentanwälte PartG mbB
(86) International application number: PCT/JP2024/023677
(87) International publication number: WO 2025/047092

(57) **Abstract**

Provided is a method for manufacturing a glass panel unit which may reduce the chances of causing inconveniences such as deviation of a clip from its original position with respect to an assembly as an intermediate product and fall of the clip off the assembly when the clip is placed on the assembly. The manufacturing method includes providing an assembly 100. The clip 1 is placed on an outer peripheral edge of the assembly 100 by clamping the assembly 100. In a placed state where the clip 1 is placed, the assembly 100 is carried using a carrier 3. A first glass pane 200 and a second glass pane 300 are bonded with a peripheral wall 410. In the placed state, a first member 4A of the clip 1 is in contact with a first outer surface 2A of the first glass pane 200 and a second member 4B thereof is in contact with a second outer surface 2B of the second glass pane 300. The second member 4B includes a contact portion 6B, a base portion 7B, and a linking portion 8B. In the placed state, the linking portion 8B is not located below the contact portion 6B and a surface 71B, facing downward, of the base portion 7B is located above the second outer surface 2B.

## Description

### Technical Field

The present disclosure generally relates to a method for manufacturing a glass panel unit and also relates to a clip. More particularly, the present disclosure relates to a method for manufacturing a glass panel unit including two glass panels and a peripheral wall interposed between the two glass panels, and also relates to a clip applicable to this method.

### Background Art

Patent Literature 1 teaches that a method for manufacturing a glass panel unit includes the following assembling process step, setting process step, distinguishing process step, and placing process step. The assembling process step is the process step of providing an assembly. The setting process step is the process step of setting a plurality of holder placement areas along the outer peripheral edge of a peripheral wall. The distinguishing process step is the process step of distinguishing a first area where a slit is not adjacent to the peripheral wall from a second area where the slit is adjacent to the peripheral wall. The placing process step is the process step of placing holders in the first area without placing any holder in the second area. According to Patent Literature 1, clips are used as exemplary holders.

### Citation List

### Patent Literature

Patent Literature 1: WO 2019/239846 A1

### Summary of Invention

In a manufacturing process of a glass panel unit, while an assembly as an intermediate product is being carried with a clip placed on the assembly, the clip sometimes collides against the carrier to deviate from its original position or even come off the assembly. In that case, the glass panels will be held so insufficiently as to cause inconveniences such as slight leakage of a vacuum.

An object of the present disclosure to provide a method for manufacturing a glass panel unit while reducing the chances of causing inconveniences such as deviation of the clip from its original position with respect to the assembly and fall of the clip off the assembly and also provide a clip suitably applicable to the manufacturing method.

A method for manufacturing a glass panel unit according to an aspect of the present disclosure includes providing an assembly. The assembly includes: a first glass pane; a second glass pane facing the first glass pane; and a peripheral wall interposed between the first glass pane and the second glass pane which is formed out of a sealant disposed in a frame shape. The first glass pane has a first outer surface facing away from the second glass pane. The second glass pane has a second outer surface facing away from the first glass pane. The method also includes placing a plurality of clips along an outer peripheral edge of the assembly to cause each of the plurality of clips to clamp the assembly. The method further includes carrying the assembly using a carrier in a placed state where the plurality of clips are placed on the assembly. The method further includes bonding the first glass pane and the second glass pane together with the peripheral wall. The carrier carries the assembly along the second outer surface with the assembly mounted on the carrier such that the second outer surface of the assembly faces downward. Each of the plurality of clips includes a first member, a second member, and an elastic mechanism. The assembly is clamped, in the placed state, between the first member and the second member such that the first member is brought into contact with the first outer surface and that the second member is brought into contact with the second outer surface. The elastic mechanism applies elastic force to the first member and the second member to clamp the assembly. The second member includes: a contact portion, at least part of which comes into contact with the second outer surface in the placed state; a base portion linked to the elastic mechanism; and a linking portion interposed between the contact portion and the base portion to link the contact portion and the base portion to each other. When the second outer surface is horizontal and faces downward in the placed state, the linking portion is not located below the contact portion and a surface, facing downward, of the base portion is located above the second outer surface.

A clip according to another aspect of the present disclosure is placed on a target by clamping the target. The clip includes a first member, a second member, and an elastic mechanism. In a placed state where the clip is placed on the target, the target is clamped between the first member and the second member. The elastic mechanism applies elastic force to the first member and the second member to clamp the target. The second member includes: a contact portion, at least part of which comes into contact with the target in the placed state; a base portion linked to the elastic mechanism; and a linking portion interposed between the contact portion and the base portion to link the contact portion and the base portion to each other. When the contact surface, coming into contact with the target in the placed state, of the contact portion is horizontal and faces upward, the linking portion is not located below the contact portion and a surface, facing downward, of the base portion is located above the contact surface.

### Brief Description of Drawings

[FIG. 1] FIG. 1 is a plan view of a first member of a clip according to an exemplary embodiment;
[FIG. 2] FIG. 2 is a side view of the first member of the clip according to the exemplary embodiment;
[FIG. 3] FIG. 3 is a plan view of a second member of the clip according to the exemplary embodiment;
[FIG. 4] FIG. 4 is a side view of the second member of the clip according to the exemplary embodiment;
[FIG. 5] FIG. 5 is a side view illustrating a mounted state of the clip according to the exemplary embodiment;
[FIG. 6] FIG. 6 is a plan view of a glass panel unit assembly according to the exemplary embodiment;
[FIG. 7] FIG. 7 is a cross-sectional view taken along the plane A-A shown in FIG. 6;
[FIG. 8] FIG. 8 is a plan view of a work in progress of a glass panel unit according to the exemplary embodiment;
[FIG. 9] FIG. 9 is a cross-sectional view taken along the plane B-B shown in FIG. 8;
[FIG. 10] FIG. 10 illustrates an assembling process step of a method for manufacturing a glass panel unit according to the exemplary embodiment;
[FIG. 11] FIG. 11 illustrates a setting process step and a distinguishing process step of the manufacturing method;
[FIG. 12] FIG. 12 illustrates a mounting process step and a carrying process step of the manufacturing method;
[FIG. 13] FIG. 13 illustrates a removing process step of the manufacturing method;
[FIG. 14] FIG. 14 is a side view of a clip according to a variation; and
[FIG. 15] FIG. 15 is a perspective view of the clip according to the variation.

### Description of Embodiments

An exemplary embodiment and its variations will be described with reference to the accompanying drawings. Note that the embodiment and its variations to be described below are only an exemplary one of various embodiments of the present disclosure and its variations and should not be construed as limiting. Rather, the exemplary embodiment and its variations may be readily modified in various manners depending on a design choice or any other factor without departing from the scope of the present disclosure. Optionally, configurations according to the variations may be adopted in combination as appropriate.

The drawings to be referred to in the following description of embodiments are all schematic representations. Thus, the ratio of the dimensions of respective constituent elements illustrated on the drawings does not always reflect their actual dimensional ratio.

### 1. Embodiment

A method for manufacturing a glass panel unit 10 (hereinafter simply referred to as a "manufacturing method") according to an exemplary embodiment includes providing an assembly 100 (hereinafter referred to as an "assembling process step"). The assembly 100 includes: a first glass pane 200; a second glass pane 300 facing the first glass pane 200; and a peripheral wall 410 interposed between the first glass pane 200 and the second glass pane 300 which is formed out of a sealant disposed in a frame shape. The first glass pane 200 has a first outer surface 2A facing away from the second glass pane 300. The second glass pane 300 has a second outer surface 2B facing away from the first glass pane 200.

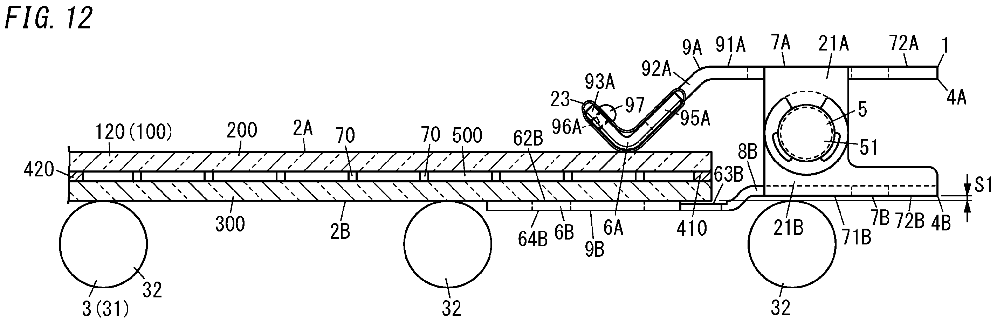

The manufacturing method according to this embodiment also includes placing a plurality of clips 1 along an outer peripheral edge of the assembly 100 to cause each of the plurality of clips 1 to clamp the assembly 100 (hereinafter referred to as a "placing process step") (refer to FIG. 12).

The manufacturing method according to this embodiment further includes carrying the assembly 100 using a carrier 3 in a placed state where the plurality of clips 1 are placed on the assembly 100 (hereinafter referred to as a "carrying process step") (refer to FIG. 12).

The method for manufacturing the glass panel unit 10 further includes bonding the first glass pane 200 and the second glass pane 300 together with the peripheral wall 410 (hereinafter referred to as a "bonding process step").

In the carrying process step, the carrier 3 carries the assembly 100 along the second outer surface 2B with the assembly 100 mounted on the carrier 3 such that the second outer surface 2B of the assembly 100 faces downward.

Each of the plurality of clips 1 includes a first member 4A, a second member 4B, and an elastic mechanism 5. The assembly 100 is clamped, in the placed state, between the first member 4A and the second member 4B such that the first member 4A is brought into contact with the first outer surface 2A and that the second member 4B is brought into contact with the second outer surface 2B. The elastic mechanism 5 applies elastic force to the first member 4A and the second member 4B to clamp the assembly 100. The second member 4B includes: a contact portion 6B, at least part of which comes into contact with the second outer surface 2B in the placed state; a base portion 7B linked to the elastic mechanism 5; and a linking portion 8B interposed between the contact portion 6B and the base portion 7B to link the contact portion 6B and the base portion 7B to each other. When the second outer surface 2B is horizontal and faces downward in the placed state, the linking portion 8B is not located below the contact portion 6B and a surface, facing downward, of the base portion 7B is located above the second outer surface 2B.

The manufacturing method according to this embodiment makes it easier to keep the relative positions of the first glass pane 200, the second glass pane 300, and the peripheral wall 410 maintained by placing the clip 1 on the assembly 100. This reduces the chances of causing a deviation in the relative positions of respective constituent members of the glass panel unit 10. In addition, this also reduces, while the assembly 100 mounted on the carrier 3 is being carried in the placed state where the clip 1 is placed on the assembly 100, the chances of the clip 1 protruding toward the carrier 3. This not only allows the assembly 100 to be mounted with stability on the carrier 3 but also reduces the chances of applying impact from the carrier 3 to the clip 1. Consequently, this may reduce the chances of causing inconveniences such as the deviation of the clip from its original position with respect to the assembly 100 and fall of the clip 1 off the assembly 100.

If the clip 1 deviates from its original position with respect to the assembly 100 or if the clip 1 falls off the assembly 100, this may cause some defects to the glass panel unit 10. For example, this may shift the first glass pane 200, the second glass pane 300, and the peripheral wall 410 from their original positions and may also cause a bias in the distribution of the force applied from the clip 1 to the first glass pane 200 and the second glass pane 300. In that case, the positional accuracy may deteriorate between the first glass pane 200, second glass pane 300, and peripheral wall 410 of the glass panel unit 10. In addition, this may also allow the peripheral wall 410 to be melted and solidified before the peripheral wall 410 adheres sufficiently to the first glass pane 200 or the second glass pane 300. In that case, the gap between the first glass pane 200 and the second glass pane 300 may fail to be sufficiently closed by the peripheral wall 410 and the internal space 500 (to be described later) may fail to be maintained in either a vacuum or a reduced pressure condition.

In contrast, the manufacturing method according to this embodiment may reduce the chances of causing inconveniences such as the deviation of the clip 1 from its original position with respect to the assembly 100 and fall of the clip 1 off the assembly 100, thereby reducing the frequency of occurrence of such defects in the glass panel unit 10.

A manufacturing method according to an exemplary embodiment will be described in further detail.

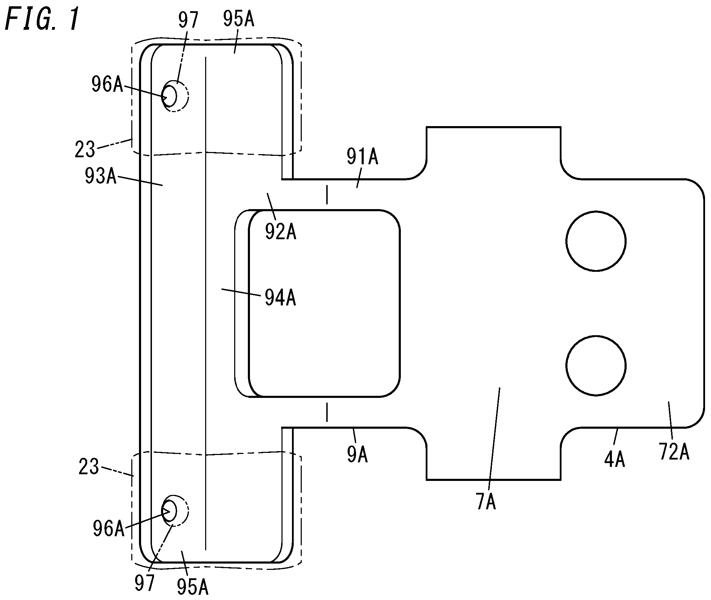

First, the structure of the clip 1 will be described with reference to FIGS. 1-5. The clip 1 is a member for clamping a target 120. In this embodiment, the target 120 is the assembly 100.

As described above, the clip 1 includes the first member 4A, the second member 4B, and the elastic mechanism 5. In the placed state where the clip 1 is placed on the target 120, the target 120 is clamped between the first member 4A and the second member 4B.

In the following description of the clip 1, the first member 4A is defined to be located upward of the second member 4B, and the second member 4B is defined to be located downward of the first member 4A. In addition, in the placed state, the target 120 is defined to be located forward of the elastic mechanism 5, and the elastic mechanism 5 is defined to be located backward of the target 120. Furthermore, if the upward/downward and forward/backward directions for the observer are supposed to agree with the upward/downward and forward/backward directions in the foregoing description of the clip 1, then the rightward/leftward directions for the observer are defined to be the rightward/leftward directions in the following description of the clip 1. Note that the upward/downward, forward/backward, and rightward/leftward directions are defined as such only for the sake of convenience, not to define, for example, the orientation of the clip 1 when the clip 1 is used.

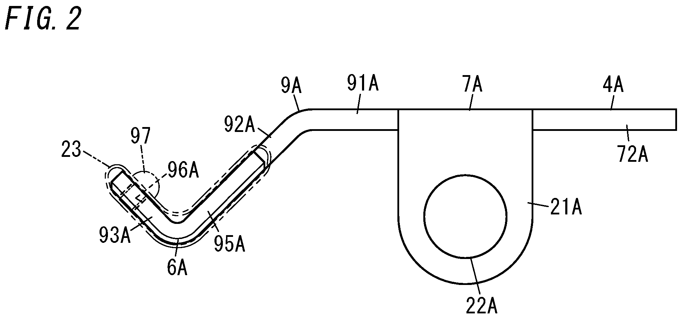

As shown in FIGS. 1 and 2, the first member 4A includes a base portion 7A linked to the elastic mechanism 5 and an action portion 9A located forward of the base portion 7A.

The base portion 7A has the shape of a flat plate having thickness in the upward/downward direction.

The first member 4A further includes two connecting portions 21A respectively extending downward from the left and right side edges of the base portion 7A. The base portion 7A is linked to the elastic mechanism 5 via the connecting portions 21A. Each of these connecting portions 21A has a supporting hole 22A which penetrates through the connecting portion 21A in the rightward/leftward direction. The two connecting portions 21A face each other in the rightward/leftward direction and the two supporting holes 22A also face each other in the rightward/leftward direction. As will be described later, the supporting holes 22A support the elastic mechanism 5.

The base portion 7A includes an operating portion 72A backward of the supporting holes 22A, i.e., opposite from the action portion 9A with respect to the elastic mechanism 5.

The action portion 9A includes: a first part 91A extending forward from the front end of the base portion 7A; a second part 92A extending obliquely forward and downward from the front end of the first part 91A with respect to the first part 91A; and a third part 93A extending obliquely forward and upward from the front end of the second part 92A with respect to the second part 92A. Each of the first part 91A, the second part 92A, and the third part 93A has the shape of a flat plate. The angled portion linking the second part 92A to the third part 93A will be hereinafter referred to as a "contact portion 6A."

When the first member 4A is viewed in plan from over the first member 4A, the action portion 9A includes a central piece 94A and two side pieces 95A linked to the right and left side edges of a frontend part of the central piece 94A. The side piece 95A linked to the left side edge of the central piece 94A extends to the left from the central piece 94A. The side piece 95A linked to the right side edge of the central piece 94A extends to the right from the central piece 94A. Each side piece 95A includes a portion of the second part 92A, a portion of the third part 93A, and a portion of the contact portion 6A and is bent in a V-shape. Each side piece 95A has a through hole 96A in that portion of the third part 93A.

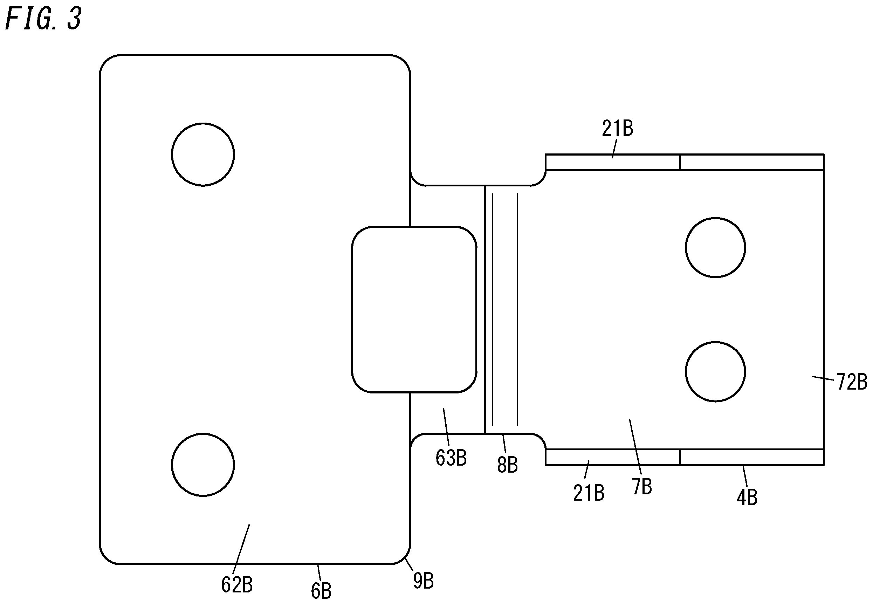

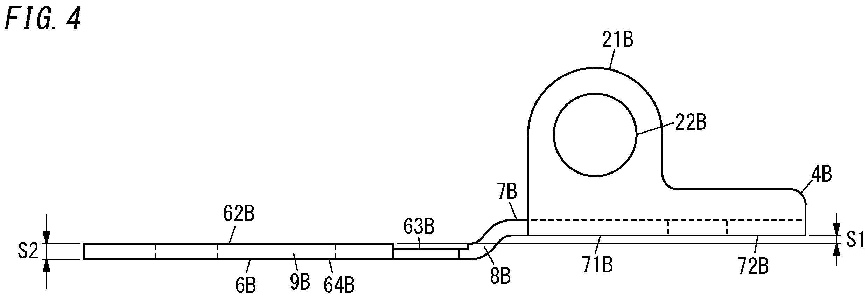

As shown in FIGS. 3 and 4, the second member 4B includes: a base portion 7B linked to the elastic mechanism 5; and an action portion 9B located forward of the base portion 7B. The second member 4B is rotatable with respect to the first member 4A. In the following description, the structure of the second member 4B will be described with respect to a reference state where the base portion 7A of the first member 4A and the base portion 7B of the second member 4B are arranged parallel to each other and the contact portion 6A of the first member 4A and the contact portion 6B of the second member 4B are out of contact with each other. Note that in a state where no external force is applied to the first member 4A and the second member 4B, the base portion 7B of the second member 4B is tilted downward toward the front end thereof, and the contact portion 6B of the second member 4B is either in contact with, or in proximity with, the contact portion 6A of the first member 4A.

The base portion 7B has the shape of a flat plate having thickness in the upward/downward direction.

The second member 4B further includes two connecting portions 21B extending upward from the left and right side edges of the base portion 7B. The base portion 7B is linked to the elastic mechanism 5 via the connecting portions 21B. Each of these connecting portions 21B has a supporting hole 22B which penetrates through the connecting portion 21B in the rightward/leftward direction. The two connecting portions 21B face each other in the rightward/leftward direction and the two supporting holes 22B also face each other in the rightward/leftward direction. As will be described later, the supporting holes 22B support the elastic mechanism 5.

The base portion 7B includes an operating portion 72B backward of the supporting holes 22B, i.e., opposite from the action portion 9B with respect to the elastic mechanism 5.

The action portion 9B includes: the contact portion 6B; and the linking portion 8B interposed between the rear end of the contact portion 6B and the front end of the base portion 7B to link the rear end of the contact portion 6B to the front end of the base portion 7B.

The contact portion 6B has the shape of a flat plate having thickness in the upward/downward direction. One surface, facing upward, of the contact portion 6B (i.e., the surface facing toward the target 120 in the placed state) includes a contact surface 62B as a flat surface and a recessed surface 63B located closer to the linking portion 8B with respect to the contact surface 62B. The recessed surface 63B is a surface recessed with respect to the contact surface 62B. The recessed surface 63B forms a recess which is open upward in the contact portion 6B. The recessed surface 63B is a surface covering the action portion 9B from the left end through the right end thereof. Providing the recessed surface 63B may reduce the chances of the outer peripheral edges of the target 120 (the assembly 100) coming into contact with the first member 4A in the placed state as will be described later. The recess formed by the recessed surface 63B preferably has a depth equal to or greater than 0.2 mm and more preferably has a depth equal to or greater than 0.3 mm. In addition, the depth of the recess may be, for example, at most one half as large as the thickness of the contact portion 6B.

The thickness of the contact portion 6B is preferably as small as possible as far as the contact portion 6B may maintain sufficient mechanical strength. The thickness S2 of the contact portion 6B may be equal to or greater than 1 mm and equal to or less than 3 mm, for example. This thickness is preferably equal to or greater than 1.3 mm. The thickness is preferably equal to or less than 2 mm and more preferably equal to or less than 1.5 mm.

A surface 64B, facing downward, of the contact portion 6B (i.e., the surface facing away from the target 120 in the placed state) is preferably flat entirely.

When the contact surface 62B of the contact portion 6B (i.e., the surface in contact with the target 120 in the placed state) is horizontal and faces upward, the linking portion 8B is not located below the contact portion 6B and a surface 71B, facing downward, of the base portion 7B is located above the contact surface 62B of the contact portion 6B. Specifically, when the contact surface 62B is horizontal and faces upward, the base portion 7B is located above the contact portion 6B and the surface 71B of the base portion 7B is located above the contact surface 62B of the contact portion 6B. Forming the linking portion 8B in such a shape that rises upward from the rear end of the contact portion 6B toward the front end of the base portion 7B allows the linking portion 8B to link the contact portion 6B and the base portion 7B which are located at two different levels in the upward/downward direction. In addition, the linking portion 8B is not located below the contact portion 6B in that case.

Establishing such a positional relationship between the contact portion 6B, the linking portion 8B, and the base portion 7B makes it less easy to apply impact to the clip 1 while the target 120 (the assembly 100) is being carried as will be described later. The distance as measured in the upward/downward direction between the contact surface 62B of the contact portion 6B and the surface 71B, facing downward, of the base portion 7B has a dimension S1 greater than 0 mm. The dimension S1 is preferably equal to or greater than 1 mm and more preferably equal to or greater than 2 mm. Also, the dimension measured in the upward/downward direction is equal to or less than the thickness of the target 120, for example.

The outer peripheral end edge of the surface, facing the target 120 in the placed state, of the contact portion 6B is preferably chamfered. That is to say, the end edge preferably has either a so-called "C surface" which is a flat surface with rounded corners or a so-called "R surface" which is a curved surface with rounded corners. In this case, the surface facing the target 120 in the placed state may be, for example, the contact surface 62B of the contact portion 6B or the contact surface 62B and the recessed surface 63B.

The outer peripheral end edge of the surface, facing away from the target 120 in the placed state, of the contact portion 6B is preferably chamfered. That is to say, the end edge preferably has either a so-called "C surface" which is a flat surface with rounded corners or a so-called "R surface" which is a curved surface with rounded corners. In this case, the surface facing away from the target 120 in the placed state may be, for example, a surface opposite from the contact surface 62B of the contact portion 6B or a surface opposite from the contact surface 62B and a surface opposite from the recessed surface 63B.

Each of the first member 4A and the second member 4B may be formed by subjecting a metallic plate member to machining, for example.

The first member 4A and the second member 4B are assembled together such that the action portion 9A of the first member 4A and the action portion 9B of the second member 4B face each other in the upward/downward direction, the right connecting portion 21A of the first member 4A and the right connecting portion 21B of the second member 4B are laid one on top of the other, and the left connecting portion 21A of the first member 4A and the left connecting portion 21B of the second member 4B are laid one on top of the other.

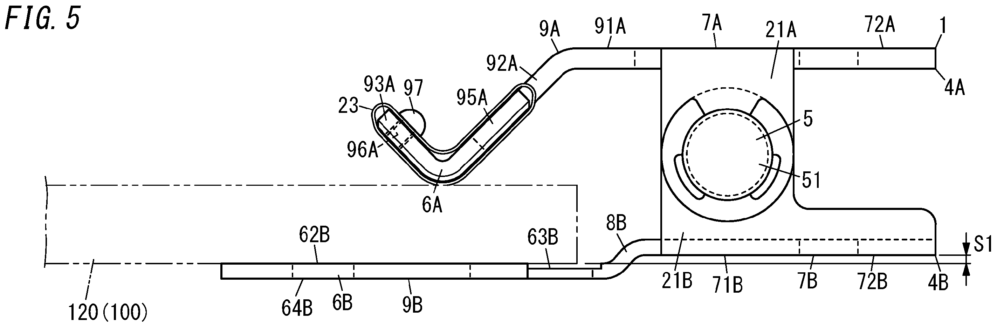

As shown in FIG. 5, the elastic mechanism 5 includes a center shaft 51 and a torsion coil spring wound around the center shaft 51. The center shaft 51 has the shape of a column having length in the rightward/leftward direction. The left end portion of the center shaft 51 is passed through the supporting hole 22A of the left connecting portion 21B of the first member 4A and the supporting hole 22B of the left connecting portion 21B of the second member 4B. The right end portion of the center shaft 51 is passed through the supporting hole 22A of the right connecting portion 21A of the first member 4A and the supporting hole 22B of the right connecting portion 21B of the second member 4B. This allows the first member 4A to pivot on the center shaft 51 with respect to the second member 4B. The torsion coil spring applies elastic force to the first member 4A and the second member 4B to clamp the assembly 100 between them. That is to say, the torsion coil spring applies elastic force to the first member 4A and the second member 4B to cause the first member 4A to rotate with respect to the second member 4B and thereby bring the action portion 9A of the first member 4A closer toward the action portion 9B of the second member 4B.

If the clip 1 is not in the placed state and no external force is applied to the clip 1, causing the elastic mechanism 5 to apply the elastic force to the first member 4A and the second member 4B brings the contact portion 6A of the first member 4A into contact with, or in proximity with, the contact portion 6B of the second member 4B.

When using the clip 1, the user applies force to the two operating portions 72A, 72B of the clip 1 by, for example, pinching the two operating portions 72A, 72B with his or her fingers such that the two operating portions 72A, 72B are brought closer to each other. Applying this force causes the first member 4A to rotate with respect to the second member 4B by overcoming the elastic force applied by the elastic mechanism 5, thus separating the action portion 9A of the first member 4A from the action portion 9B of the second member 4B and thereby leaving a gap between the contact portion 6A of the first member 4A and the contact portion 6B of the second member 4B. In this state, the outer peripheral edge of the target 120 (the assembly 100) is inserted into the gap between the action portion 9A of the first member 4A and the action portion 9B of the second member 4B. When the user removes, in this state, the force that has been applied to the operating portions 72A, 72B, the action portion 9A of the first member 4A is caused to rotate toward the action portion 9B of the second member 4B under the elastic force applied by the elastic mechanism 5 to the first member 4A and the second member 4B. As a result, the contact portion 6A of the first member 4A and the contact portion 6B of the second member 4B are brought into contact with the target 120 (the assembly 100), whereby the target 120 (the assembly 100) is clamped between the contact portion 6A of the first member 4A and the contact portion 6B of the second member 4B. Consequently, the clip 1 is placed on the target 120. That is to say, the placed state is established (refer to FIG. 5).

In the placed state, the contact portion 6A of the first member 4A is preferably located forward of the outer peripheral edge of the target 120 (the assembly 100). That is to say, the edge of the target 120 (the assembly 100) and the contact portion 6A are separated from each other in the forward/backward direction. As a result, a gap is left in the upward/downward direction between parts (i.e., the second part 92A and the first part 91A), located backward of the contact portion 6A, of the action portion 9A of the first member 4A and the target 120 (the assembly 100) to bring the first member 4A out of contact with the edge.

In addition, in the placed state, the contact surface 62B of the contact portion 6B of the second member 4B is preferably located forward of the outer peripheral edge of the target 120 (the assembly 100), thereby bringing the contact surface 62B of the contact portion 6B into contact with the target 120 (the assembly 100). That is to say, the edge of the target 120 (the assembly 100) and the contact surface 62B are separated from each other in the forward/backward direction. The recessed surface 63B of the contact portion 6B is arranged to face the edge. This brings the second member 4B out of contact with the edge.

In the placed state, the base portion 7B of the second member 4B is located above the surface, facing downward, of the target 120 (the assembly 100). Thus, the base portion 7B does not protrude downward of the target 120 (the assembly 100). This makes it less easy for the base portion 7B to come into contact with the carrier 3 when the target 120 (the assembly 100) is mounted on the carrier 3 as will be described later. In addition, the linking portion 8B does not protrude downward of the contact portion 6B. This makes it less easy for the linking portion 8B to come into contact with the carrier 3 when the target 120 (the assembly 100) is mounted on the carrier 3. This makes it easier to mount the target 120 (the assembly 100) on the carrier 3 with stability and impact is less likely to be applied from the carrier 3 to the base portion 7B and the linking portion 8B. Consequently, this reduces the chances of causing inconveniences such as deviation of the clip 1 from its original position with respect to the target 120 (the assembly 100) and fall of the clip 1 off the target 120 (the assembly 100).

In addition, the surface, facing downward, of the contact portion 6B of the second member 4B (i.e., the surface facing away from the target 120 (the assembly 100)) will be a flat surface extending along the surface, facing downward, of the target 120 (the assembly 100). This makes it even easier to mount the target 120 (the assembly 100) on the carrier 3 with more stability and the impact is even less likely to be applied from the carrier 3 to the contact portion 6B. Consequently, this reduces the chances of causing inconveniences such as deviation of the clip 1 from its original position and fall of the clip 1.

Furthermore, bringing neither the first member 4A nor the second member 4B into contact with the edge in the placed state as described above allows the clip 1 to avoid contact with the outer peripheral edge of the target 120 (the assembly 100). This reduces the chances of impact being applied from the clip 1 to the easily damageable edge of the target 120 (the assembly 100), thus reducing the damage to be done to the target 120 (the assembly 100).

Furthermore, chamfering the outer peripheral end edge of the surface, facing the target 120 in the placed state, of the contact portion 6B of the second member 4B may reduce the chances of the target 120 being scratched by the end edge of the contact portion 6B when impact is applied to the clip 1 in the placed state, for example.

Optionally, the clip 1 may include a shock absorber 23 covering the contact portion 6A of the first member 4A as shown in FIGS. 1, 2, and 5. The shock absorber 23 may be, for example, a member formed in a ring shape out of a resin sheet. The shock absorber 23 is attached to each of the two side pieces 95A of the action portion 9A of the first member 4A. The shock absorber 23 is attached to each side piece 95A to wrap around the side piece 95A, thereby covering the contact portion 6A with the shock absorber 23. Attaching a fastening member 97 such as a screw to the side piece 95A such that the fastening member 97 passes through the shock absorber 23 and the through hole 96A of the side piece 95A may reduce the chances of the shock absorber 23 coming off the side piece 95A.

The contact portion 6A of the first member 4A has an angled shape. Thus, the pressure applied by the contact portion 6A of the first member 4A to the target 120 (the assembly 100) may be greater than the pressure applied by the contact portion 6B of the second member 4B to the target 120 (the assembly 100). However, covering the contact portion 6A of the first member 4A with the shock absorber 23 causes the contact portion 6A to contact with the target 120 (the assembly 100) via the shock absorber 23. This may reduce the damage that would be done to the target 120 (the assembly 100) upon the application of the pressure from the contact portion 6A of the first member 4A to the target 120 (the assembly 100).

Next, an exemplary method for manufacturing a glass panel unit 10 using the clip 1 will be described.

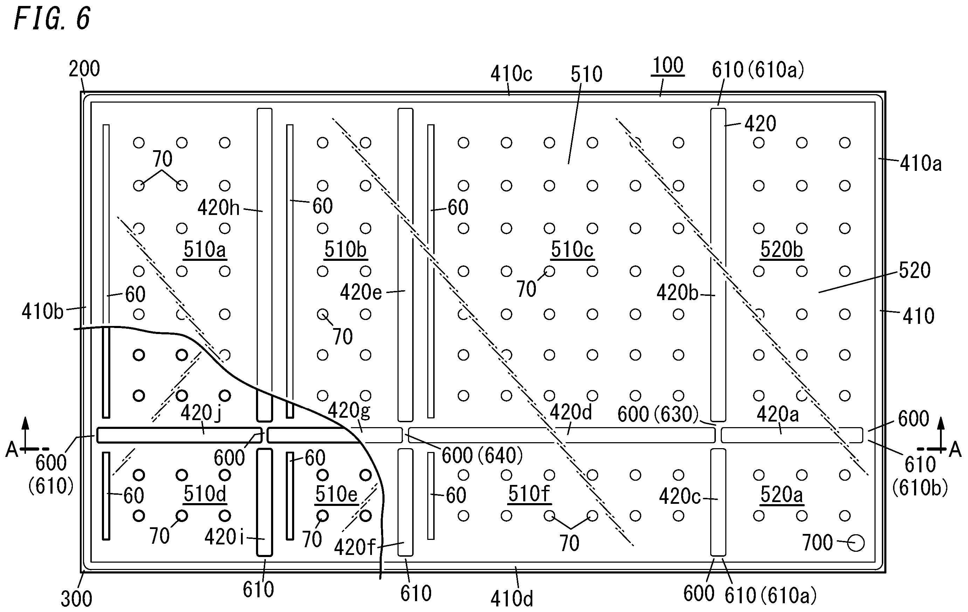

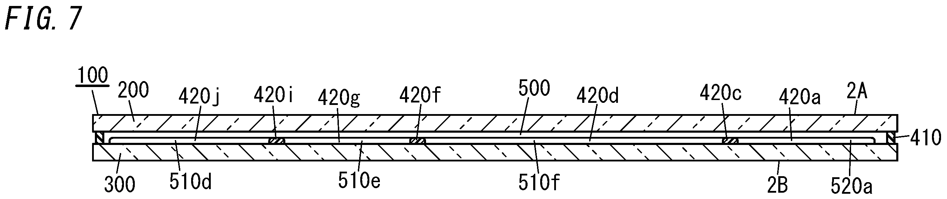

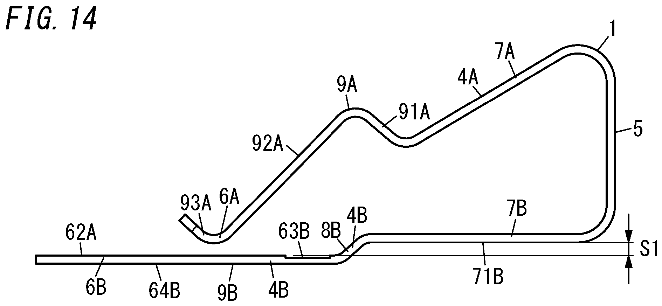

FIGS. 6 and 7 illustrate an assembly 100 according to this embodiment. The assembly 100 is used to manufacture one or more glass panel units 10 (e.g., glass panel units 10A-0F shown in FIG. 14 in this embodiment).

The assembly 100 includes the first glass pane 200, the second glass pane 300, the peripheral wall 410, an internal space 500, partitions 420 (consisting of partitions 420a-420j), an evacuation port 700, and air passages 600. The second glass pane 300 faces the first glass pane 200. The peripheral wall 410 is provided between the first glass pane 200 and the second glass pane 300. The peripheral wall 410 has a frame shape. The internal space 500 is surrounded by the first glass pane 200, the second glass pane 300, and the peripheral wall 410. The partitions 420 partition the internal space 500 into first spaces 510 (consisting of first spaces 510a-510f) and second spaces 520 (consisting of second spaces 520a, 520b). The evacuation port 700 allows the second spaces 520 to communicate with the external space. The air passages 600 are used to evacuate the first spaces 510 through the evacuation port 700. The air passages 600 have slits 610. The slits 610 are in contact with the inner peripheral edges of the peripheral wall 410 and are interposed between the peripheral wall 410 and the partitions 420.

This assembly 100 allows the second space 520b to be used as a part of the evacuation path while the first space 510c is being evacuated through the evacuation port 700. This allows the evacuation to be done efficiently.

Next, the assembly 100 according to this embodiment will be described in detail. The assembly 100 is used to manufacture a plurality of glass panel units 10. For example, the assembly 100 may be used to manufacture six glass panel units 10A-10F shown in FIG. 14.

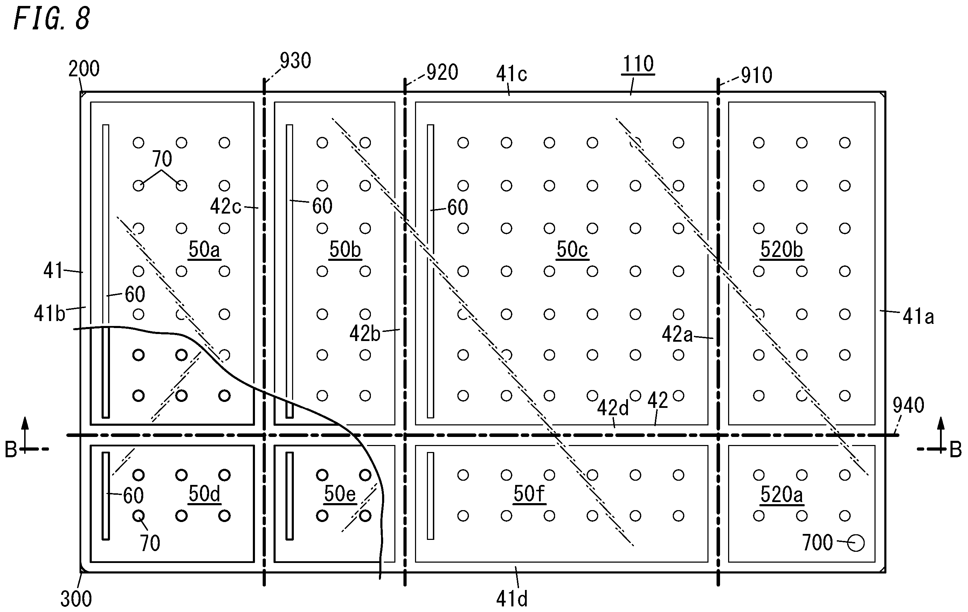

The glass panel units 10 (10A-10F) are vacuum insulated glazing (VIG) units. A vacuum insulated glazing unit is a type of multilayer glass panel unit including at least one pair of glass panels. The vacuum insulated glazing unit has a vacuum space between each pair of glass panels. Each of these glass panel units 10A-10F includes a pair of glass panels (first and second glass panels) 20, 30 and a frame member 40 as shown in FIG. 14. Each of the glass panel units 10A-10F has a space (vacuum space) 50 (50a-50f (refer to FIG. 8)) surrounded by the first glass panel 20, the second glass panel 30, and the frame member 40. Each of the glass panel units 10A-10F further includes a gas adsorbent 60 and a plurality of pillars (spacers) 70 inside the vacuum space 50. In addition, as can be seen easily from FIG. 14, the glass panel units 10A-10F each have a quadrangular shape in plan view but their sizes and shapes are not necessarily the same.

The first glass panel 20 has the same shape as the second glass panel 30. Each of the first glass panel 20 and the second glass panel 30 has the shape of a rectangular flat plate. Examples of materials for the first and second glass panels 20, 30 include soda lime glass, high strain point glass, chemically tempered glass, alkali-free glass, quartz glass, Neoceram, and thermally tempered glass. The surface of the first glass panel 20 and/or the second glass panel 30 may be provided with a coating. Examples of the coating include a transparent infrared reflective film. Note that the coating does not have to be an infrared reflective film but may also be a film having desired physical properties.

The frame member 40 is provided between the first glass panel 20 and the second glass panel 30 to hermetically bond the first glass panel 20 and the second glass panel 30 together. As a result, a space surrounded by the first glass panel 20, the second glass panel 30, and the frame member 40 is created. The space surrounded by the first glass panel 20, the second glass panel 30, and the frame member 40 is a vacuum space 50. The frame member 40 is made of a hot glue (sealant). In other words, the frame member 40 is a cured product of the hot glue. The hot glue may be a glass frit, for example. The glass frit may be a low-melting glass frit, for example. Examples of the low-melting glass frits include a bismuth-based glass frit, a lead-based glass frit, and a vanadium-based glass frit. The frame member 40, as well as the first and second glass panels 20, 30, has a polygonal shape (e.g., a quadrangular shape in this embodiment). The frame member 40 is formed to extend along the outer peripheries of the first and second glass panels 20, 30. The hot glue does not have to be a glass frit but may also be a low-melting metal or a hotmelt adhesive, for example.

The gas adsorbent 60 is placed in each of the vacuum spaces 50. Specifically, the gas adsorbent 60 has an elongate flat-plate shape and is provided on the second glass panel 30, for example. The gas adsorbent 60 is used to adsorb unnecessary gases (such as a residual gas). The unnecessary gases may be gases emitted from the hot glue when the hot glue forming the peripheral wall 410 is heated. The gas adsorbent 60 includes a getter material. The getter material is a material having the property of adsorbing molecules smaller in size than a predetermined one. The getter material may be an evaporative getter material, for example. The evaporative getter material has the property of releasing adsorbed molecules when heated to a predetermined temperature (activation temperature) or more. This allows, even if the adsorption ability of the evaporative getter material deteriorates once, the evaporative getter material to recover its adsorption ability by being heated to the activation temperature or more. The evaporative getter material may be a zeolite or an ion-exchanged zeolite (such as a copper ion exchanged zeolite). The gas adsorbent 60 includes a powder of this getter material. Specifically, the gas adsorbent 60 may be formed by applying a liquid including a powder of the getter material (such as a dispersion liquid prepared by dispersing a powder of the getter material in a liquid or a solution prepared by dissolving a powder of the getter material in a liquid) and solidifying the liquid. This reduces the size of the gas adsorbent 60, thus allowing the gas adsorbent 60 to be placed even when the internal space 500 is narrow.

The plurality of pillars (spacers) 70 are placed in the vacuum spaces 50. The plurality of pillars 70 are used to maintain a predetermined gap distance between the first glass panel 20 and the second glass panel 30. That is to say, the plurality of pillars 70 are used to maintain the gap distance between the first glass panel 20 and the second glass panel 30 at a desired value. The size, number, spacing, and placement pattern of the pillars 70 may be selected appropriately. Each pillar 70 has the shape of a column, of which the height is approximately equal to the predetermined gap distance. Each pillar 70 may have a diameter of 1 mm and a height of 100 µm, for example. Alternatively, each pillar 70 may also have any other desired shape such as a prismatic shape or a spherical shape.

As shown in FIGS. 6 and 7, the assembly 100 includes the first glass pane 200, the second glass pane 300, the peripheral wall 410, the internal space 500, the partitions 420 (420a-420i), the plurality of air passages 600, and the evacuation port 700. The assembly 100 further includes the plurality of gas adsorbents 60 and the plurality of pillars 70.

The first glass pane 200 (first glass substrate) is a member that forms the basis of the first glass panel 20 and is made of the same material as the first glass panel 20. The second glass pane 300 (second glass substrate) is a member that forms the basis of the second glass panel 30 and is made of the same material as the second glass panel 30. The first and second glass panes 200, 300 have the same planar shape. Each of the first and second glass panes 200, 300 has the shape of a polygonal (e.g., rectangular in this embodiment) plate. In this embodiment, the first glass pane 200 has dimensions that are large enough to serve as the first glass panel 20 of each of the glass panel units 10A-10F, and the second glass pane 300 has dimensions that are large enough to serve as the second glass panel 30 of each of the glass panel units 10A-10F.

The peripheral wall 410 is interposed between the first glass pane 200 and the second glass pane 300. The peripheral wall 410 is a member which will be the frame member 40 that bonds the first glass panel 20 and the second glass panel 30 in each of the glass panel units 10A-10F. In the assembly 100, the peripheral wall 410 does not perform the function of bonding the first glass pane 200 and the second glass pane 300 together. The peripheral wall 410 is made of a sealant (first sealant). The first sealant includes a hot glue, for example. The hot glue may be a glass frit, for example. The glass frit may be a low-melting glass frit, for example. Examples of the low-melting glass frits include a bismuth-based glass frit, a lead-based glass frit, and a vanadium-based glass frit. The first sealant contains core members. The core members are used to define the height of the frame member 40. The core members may be, for example, spherical glass beads. The diameter of the glass beads is selected according to the height of the frame member 40. Such core members are dispersed in the hot glue at a predetermined ratio. For example, glass beads having a diameter of 50 µm to 300 µm are included at a ratio of 0.01% by weight to 1% by weight (corresponding to 0.03% by volume to 3% by volume) with respect to the hot glue.

The peripheral wall 410 is interposed between the first glass pane 200 and the second glass pane 300. The peripheral wall 410 has a frame shape as shown in FIG. 6. In particular, the peripheral wall 410 has a rectangular frame shape. The peripheral wall 410 is formed along the outer peripheries of the first and second glass panes 200, 300. The peripheral wall 410 has first to fourth sides 410a, 410b, 410c, and 410d. The first and second sides 410a, 410b extend along the width axis of the first and second glass panes 200, 300 (i.e., the upward/downward direction in FIG. 6). The third and fourth sides 410c, 410d extend along the longitudinal axis of the first and second glass panes 200, 300 (i.e., in the rightward/leftward direction in FIG. 6). The peripheral wall 410 is used to hermetically bond the first glass pane 200 and the second glass pane 300 together. Thus, an internal space 500 surrounded by the peripheral wall 410, the first glass pane 200, and the second glass pane 300 is created in the assembly 100.

Each of the partitions 420a-420j is made of a sealant (second sealant). The second sealant includes a hot glue, for example. The hot glue may be a glass frit, for example. The glass frit may be a low-melting glass frit, for example. Examples of the low-melting glass frits include a bismuth-based glass frit, a lead-based glass frit, and a vanadium-based glass frit. In this embodiment, the hot glue of the partitions 420a-420j is the same as the hot glue of the peripheral wall 410. Thus, the partitions 420a-420j and the peripheral wall 410 have the same softening point. In addition, the second sealant contains the same core members as the first sealant. In the second sealant, the core members are also dispersed in the hot glue at a predetermined ratio. For example, glass beads having a diameter of 50 µm to 300 µm are included at a ratio of 0.01% by weight to 1% by weight (corresponding to 0.03% by volume to 3% by volume) with respect to the hot glue.

The internal space 500 is a space surrounded by the first glass pane 200, the second glass pane 300, and the peripheral wall 410.

The partitions 420a-420j partition the internal space 500 into first spaces 510a-510f and second spaces 520a, 520b. In the assembly 100, the first spaces 510a-510f are spaces to be evacuated later (i.e., evacuation spaces), while the second spaces 520a, 520b are spaces for use to evacuate the first spaces 510.

As shown in FIG. 6, the partitions 420a-420j are located within the area surrounded by the peripheral wall 410. Each of the partitions 420a-420j is lower than the peripheral wall 410. Thus, as shown in FIG. 7, the peripheral wall 410 comes into contact with both of the first and second glass panes 200, 300 earlier than the partitions 420a-420j do. In the example illustrated in FIG. 7, the partitions 420a-420j are provided on the second glass pane 300, and therefore, are spaced apart from the first glass pane 200. Thus, even if the gap distance between the first and second glass panes 200, 300 is narrower in the central region than in the peripheral region thereof due to the warpage of at least one of the first and second glass panes 200, 300, the partitions 420a-420j are less likely to come into contact with both of the first and second glass panes 200, 300. This reduces the chances of the contact of the peripheral wall 410 with both of the first and second glass panes 200, 300 being interfered with by the partitions 420a-420j, thus reducing the chances of causing insufficient bonding between the first and second glass panes 200, 300. This contributes to increasing the production yield.

More specifically, the partitions 420b, 420c are elongate partitions extending along the width axis of the first and second glass panes 200, 300, (i.e., the upward/downward direction in FIG. 6) and are arranged in line so as to be spaced apart from each other along the width axis. The partitions 420b, 420c are located beside a first end (i.e., the right end in FIG. 6) along the longitudinal axis of the first and second glass panes 200, 300 (i.e., the rightward/leftward direction in FIG. 6) and are arranged to be spaced from the first side 410a of the peripheral wall 410.

The partitions 420e, 420f are elongate partitions extending along the width axis of the first and second glass panes 200, 300, and are arranged in line so as to be spaced apart from each other along the width axis. The partitions 420e, 420f are located closer to a second end (i.e., the left end in FIG. 6) along the longitudinal axis of the first and second glass panes 200, 300 than the partitions 420b, 420c are. In addition, the partitions 420e, 420f face the partitions 420b, 420c, respectively, along the longitudinal axis of the first and second glass panes 200, 300.

The partitions 420h, 420i are elongate partitions extending along the width axis of the first and second glass panes 200, 300, and are arranged in line so as to be spaced apart from each other along the width axis. The partitions 420h, 420i are located closer to the second end (i.e., the left end in FIG. 6) along the longitudinal axis of the first and second glass panes 200, 300 than the partitions 420e, 420f are. In addition, the partitions 420h, 420i face the partitions 420e, 420f, respectively, along the longitudinal axis of the first and second glass panes 200, 300.

The partitions 420a, 420d, 420g, 420j are elongate partitions extending along the longitudinal axis of the first and second glass panes 200, 300, and are arranged in line so as to be spaced apart from each other along the longitudinal axis. In particular, the partition 420a has a first end (i.e., the left end in FIG. 6) located between the partitions 420b, 420c and has a second end (i.e., the left end in FIG. 6) located adjacent to the first side 410a of the peripheral wall 410 via the air passages 600. The partition 420d has a first end (i.e., the right end in FIG. 6) located between the partitions 420b, 420c and has a second end (i.e., the left end in FIG. 6) located between the partitions 420e, 420f. The partition 420g has a first end (i.e., the right end in FIG. 6) located between the partitions 420e, 420f and has a second end (i.e., the left end in FIG. 6) located between the partitions 420h, 420i. The partition 420j has a first end (i.e., the right end in FIG. 6) located between the partitions 420h, 420i and has a second end (i.e., the left end in FIG. 6) located adjacent to the second side 410b of the peripheral wall 410 via the air passages 600.

In the assembly 100, the first space 510a is a space surrounded by the second and third sides 410b, 410c of the peripheral wall 410 and the partitions 420h, 420i, 420j. The first space 510b is a space surrounded by the third side 410c of the peripheral wall 410 and the partitions 420e, 420g, 420h. The first space 510c is a space surrounded by the third side 410c of the peripheral wall 410 and the partitions 420b, 420d, 420e. The first space 510d is a space surrounded by the second and fourth sides 410b, 410d of the peripheral wall 410 and the partitions 420i, 420j. The first space 510e is a space surrounded by the fourth side 410d of the peripheral wall 410 and the partitions 420f, 420e, 420i. The first space 510f is a space surrounded by the fourth side 410d of the peripheral wall 410 and the partitions 420c, 420d, 420f. The second space 520a is a space surrounded by the first and fourth sides 410a, 410d of the peripheral wall 410 and the partitions 420a, 420c. The second space 520b is a space surrounded by the first and third sides 410a, 410c of the peripheral wall 410 and the partitions 420a, 420b.

In this embodiment, the gas adsorbent 60 is placed in each of the first spaces 510a-510f as shown in FIG. 6. On the other hand, the plurality of pillars 70 are arranged over the entire internal space 500 (i.e., in each of the first spaces 510a-510f and the second spaces 520a, 520b) as shown in FIG. 6.

The plurality of air passages 600 are used to evacuate the first spaces (evacuation spaces) 510a-510f through the evacuation port 700. In other words, via the plurality of air passages 600, the first spaces 510a-510f are connected (either directly or indirectly) to the second space 520a, 520b. In this embodiment, the partitions 420a-420j are arranged to be out of contact with each other. The respective gaps left between the partitions 420a-420j constitute the air passages 600. The respective air passages 600 are closed by melting and deforming the partitions 420a-420j once. This allows not only at least the first spaces 510a-510f to be (hermetically) separated from each other but also the first spaces 510a-510f to be (hermetically) separated from the second spaces 520a, 520b (refer to FIG. 8).

The evacuation port 700 connects the second spaces 520a, 520b to the external space. In particular, the evacuation port 700 is a port connecting the second space 520a to the external space. The evacuation port 700 is used to evacuate the first spaces 510a-510f through the second spaces 520a, 520b and the air passages 600. Thus, the air passages 600, the second spaces 520a, 520b, and the evacuation port 700 together form an evacuation path for evacuating the first spaces 510a-510f. The evacuation port 700 is provided through the second glass pane 300 to connect the second space 520a to the external space. Specifically, the evacuation port 700 is provided at a corner of the second glass pane 300.

In this embodiment, the second space 520a is a ventilation space connected directly to the evacuation port 700. The second space 520b is not directly connected to the evacuation port 700 but constitutes a coupling space that connects the first space 510c to the second space 520a.

The plurality of air passages 600 includes a plurality of slits 610. The plurality of slits 610 are in contact with the inner peripheral edges of the peripheral wall 410 and interposed between the peripheral wall 410 and the partitions 420a-420j. The plurality of slits 610 includes a plurality of (e.g., two in this embodiment) first slits 610a connecting the first spaces 510c, 510f to the second spaces 520a, 520. The plurality of slits 610 further includes a second slit 610b connecting the second spaces 520a, 520b to each other. In this case, the second slit 610b is wider than any of the first slits 610a. This allows the second space 520b to be used as a part of the evacuation path when the first spaces 510a-510f are evacuated through the evacuation port 700. Thus, the evacuation may be done efficiently. Among other things, this may reduce the chances of, when the air passages 600 are closed by deforming the partitions 420a-420j in a second melting process step (partition forming process step) to be described later, the second slits 610b being closed before the first slits 610a are all closed. Thus, this may reduce the chances of the first space 510c being separated from the second space 520a before the first space 510c is sufficiently evacuated. This contributes to increasing the production yield.

Next, a method for manufacturing the glass panel units 10 (10A-10F) using the assembly 100 will be described with reference to FIGS. 8-13. This method for manufacturing the glass panel units 10 includes preparatory process steps and a removing process step.

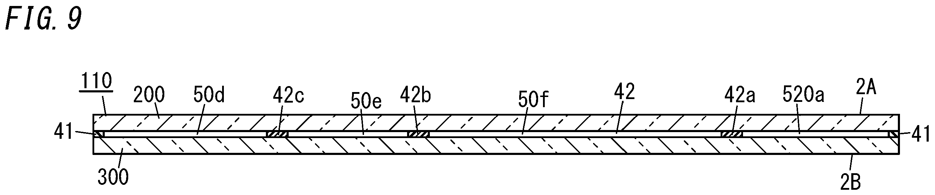

The preparatory process steps are the process steps of providing a work in progress 110 of glass panel units 10 (hereinafter simply referred to as the "work in progress") shown in FIGS. 8 and 9. The work in progress 110 is formed out of the assembly 100.

The work in progress 110 includes the pair of glass panes (first and second glass panes) 200, 300, a peripheral wall 41, and boundary walls 42a-42d as shown in FIGS. 8 and 9. In addition, the work in progress 110 further has vacuum spaces 50a-50f and second spaces 520a, 520b. Besides, the work in progress 110 further includes a gas adsorbent 60 and a plurality of pillars (spacers) 70 in each of the vacuum spaces 50a-50f. The work in progress 110 further has an evacuation port 700.

The peripheral wall 41 is provided between the first and second glass panes 200, 300 to hermetically bond the first and second glass panes 200, 300 together. The peripheral wall 41 is formed by once melting, and then solidifying again, the peripheral wall 410 of the assembly 100. Just like the peripheral wall 410 of the assembly 100, the peripheral wall 41 of the work in progress 110 also has a frame shape. In particular, the peripheral wall 41 has first to fourth sides 41a, 41b, 41c, 41d. The first and second sides 41a, 41b extend along the width axis of the first and second glass panes 200, 300 (i.e., in the upward/downward direction in FIG. 8). The third and fourth sides 41c, 41d extend along the longitudinal axis of the first and second glass panes 200, 300 (i.e., in the rightward/leftward direction in FIG. 8).

The boundary walls 42a-42d (spatially) separate the vacuum spaces 50a-50f and the second spaces 520a, 520b from each other. The boundary walls 42a-42d are formed out of the partitions 420a-420j. More specifically, the boundary wall 42a linearly extends along the width axis of the first and second glass panes 200, 300 to couple together the third and fourth sides 41c, 41d of the peripheral wall 41. The boundary wall 42b linearly extends along the width axis of the first and second glass panes 200, 300 to couple together the third and fourth sides 41c, 41d of the peripheral wall 41. Such a boundary wall 42b faces the boundary wall 42a along the longitudinal axis of the first and second glass panes 200, 300. The boundary wall 42c linearly extends along the width axis of the first and second glass panes 200, 300 to couple together the third and fourth sides 41c, 41d of the peripheral wall 41. Such a boundary wall 42c faces the boundary wall 42b along the longitudinal axis of the first and second glass panes 200, 300. The boundary wall 42d linearly extends along the longitudinal axis of the first and second glass panes 200, 300 to couple together the first and second sides 41a, 41b of the peripheral wall. Such a boundary wall 42d crosses the boundary walls 42a-42c.

The boundary wall 42a is formed by deforming the partitions 420a, 420b, 420c, 420d. The boundary wall 42b is formed by deforming the partitions 420d, 420e, 420f, 420g. The boundary wall 42c is formed by deforming the partitions 420g, 420h, 420i, 420j. The boundary wall 42d is formed by deforming the partitions 420a-420j.

The vacuum spaces 50a-50f are formed by evacuating the first spaces 510a-510g through the second spaces 520a, 520b and the evacuation port 700. In other words, the vacuum spaces 50a-50g are the first spaces 510a-510f having a degree of vacuum equal to or less than a predetermined value. The predetermined value may be 0.1 Pa, for example. The vacuum spaces 50a-50f are perfectly sealed hermetically by the first glass pane 200, the second glass pane 300, the peripheral wall 41, and the boundary walls 42a-42d, and therefore, are separated from the second spaces 520a, 520b and the evacuation port 700.

In the work in progress 110, the vacuum space 50a (first space 510a) is a space surrounded by the second and third sides 41b, 41c of the peripheral wall 41 and the boundary walls 42c, 42d. The vacuum space 50b (first space 510b) is a space surrounded by the third side 41c of the peripheral wall 41 and the boundary walls 42b, 42c, 42d. The vacuum space 50c (first space 510c) is a space surrounded by the third side 41c of the peripheral wall 41 and the boundary walls 42a, 42b, 42d. The vacuum space 50d (first space 510d) is a space surrounded by the second and fourth sides 41b, 41d of the peripheral wall 41 and the boundary walls 42c, 42d. The vacuum space 50e (first space 510e) is a space surrounded by the fourth side 41d of the peripheral wall 41 and the boundary walls 42b, 42c, 42d. The vacuum space 50f (first space 510f) is a space surrounded by the fourth side 41d of the peripheral wall 41 and the boundary walls 42a, 42b, 42d.

As can be seen, the peripheral wall 41 and the boundary walls 42a-42d include, as their integral parts, a plurality of frame members 40 surrounding the vacuum spaces 50a-50f, respectively (refer to FIG. 14). That is to say, portions surrounding the respective vacuum spaces 50a-50f of the peripheral wall 41 and the boundary walls 42a-42d form the frame members 40.

The preparatory process steps are the process steps of providing the work in progress 110 described above. The preparatory process steps include an assembling process step, a setting process step, a distinguishing process step, a placing process step, a first melting process step (bonding process step), an evacuating process step, and a second melting step (partition forming process step).

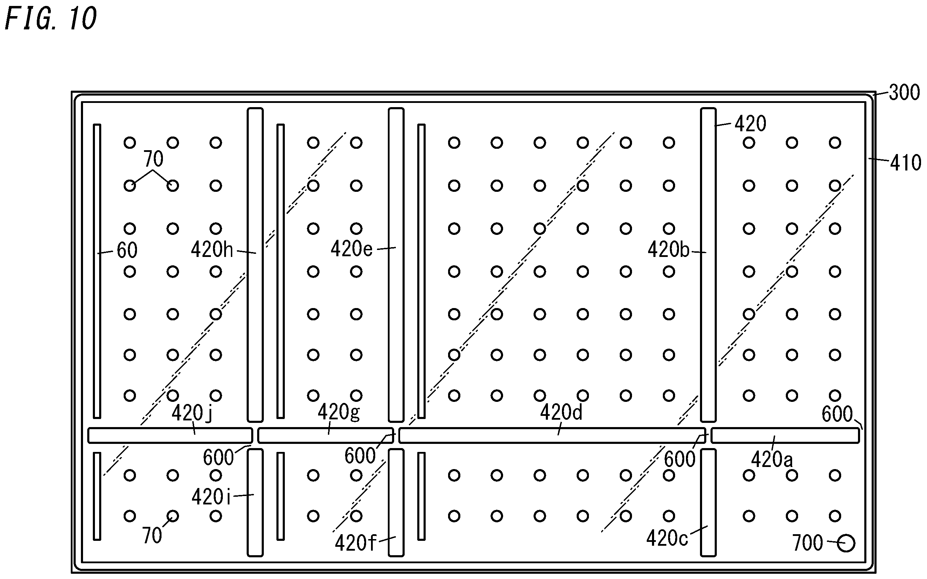

The assembling process step is the process step of providing the assembly 100 as described above. That is to say, the assembling process step includes forming the peripheral wall 410, the partitions 420a-420j, the internal space 500, the air passages 600, the evacuation port 700, the plurality of gas adsorbents 60, and the plurality of pillars 70 on the second glass pane 300 as shown in FIG. 10, for example. Thereafter, the first glass pane 200 is arranged to face the second glass pane 300 to bring the first glass pane 200 into contact with the peripheral wall 410. As a result, an assembly 100 such as the one shown in FIG. 6 is formed.

The peripheral wall 410 is formed by applying its material (first sealant) through a randomly selected coater such as dispenser onto one of the first and second glass panes 200, 300.

The respective partitions 420a-420j are formed by applying their material (second sealant) through a randomly selected coater such as dispenser onto one of the first and second glass panes 200, 300.

The process step of forming the evacuation port 700 (evacuation port forming process step) may be performed during the assembling process step. The evacuation port 700 may be provided through the first glass pane 200, for example. After the evacuation port forming process step has been performed, the first and second glass panes 200, 300 are cleaned as needed. Alternatively, the evacuation port forming process step may be performed before the peripheral wall 410 and the partitions 420a-420j are formed.

The assembling process step includes providing a plurality of pillars 70 in advance and placing, using a chip mounter or any other tool, the plurality of pillars 70 at predetermined positions on the second glass pane 300. In this embodiment, the pillars 70 are lower than the partitions 420a-420j. Alternatively, the plurality of pillars 70 may also be formed by a combination of photolithography and etching techniques. In that case, the plurality of pillars 70 may be made of a photocurable material, for example. Still alternatively, the plurality of pillars 70 may also be formed by a known thin film forming technique.

The gas adsorbent 60 may be formed by applying, using a dispenser, for example, a solution in which a powder of a getter material is dispersed onto a predetermined position on the second glass pane 300 and drying the liquid.

The assembly 100 is obtained by performing this assembling step. After the assembling step has been performed, the setting process step, the distinguishing process step, the placing process step, the first melting process step (bonding process step), the evacuating process step, and the second melting process step (partition forming process step) are carried out.

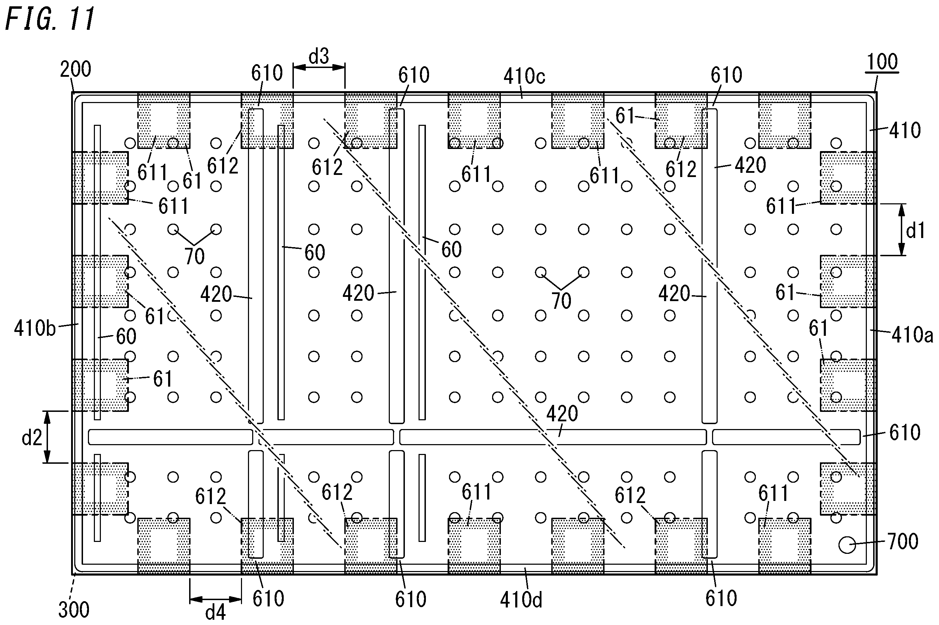

The setting process step is the process step of setting a plurality of clip 1 placement areas 61 along the outer peripheral edges of the peripheral wall 410. In the example illustrated in FIG. 11, the clip 1 placement areas 61 are set at twenty-two positions. The clip 1 placement areas 61 are areas to be set irrespective of the slits 610 before the placing process step is performed. The clip 1 placement areas 61 are spaced from each other at regular intervals along each side of the peripheral wall 410 as shown in FIG. 11. This allows the respective positions of the clip 1 placement areas 61 to be set efficiently. The plurality of clip 1 placement areas 61 are set on the outer surface of one of the first and second glass panes 200, 300 using, for example, a jig for determining the positions of the respective clip 1 placement areas 61.

More particularly, the plurality of clip 1 placement areas 61 are set on the first side 410a to be uniformly spaced from each other at predetermined intervals (first predetermined intervals) d1. The plurality of clip 1 placement areas 61 are set on the second side 410b to be uniformly spaced from each other at predetermined intervals (second predetermined intervals) d2. The plurality of clip 1 placement areas 61 are set on the third side 410c to be uniformly spaced from each other at predetermined intervals (third predetermined intervals) d3. The plurality of clip 1 placement areas 61 are set on the fourth side 410d to be uniformly spaced from each other at predetermined intervals (fourth predetermined intervals) d4. In this case, as long as the plurality of clip 1 placement areas 61 are set on each of the first to fourth sides 410a-410d to be uniformly spaced from each other at predetermined intervals, the first to fourth predetermined intervals d1-d4 may be the same as each other or different from each other, whichever is appropriate.

After the setting process step has been performed, the distinguishing process step is performed.

The distinguishing process step is the process step of distinguishing first areas 611 from second areas 612 among the plurality of clip 1 placement areas 61 (refer to FIGS. 11 and 12). Each of the second areas 612 is an area where one of the slits 610 is adjacent to a corresponding one of the partitions 420. Each of the first areas 611 is an area where no slits 610 are adjacent to any of the partitions 420. There are a number of (e.g., sixteen in the example shown in FIG. 11) such first areas 611 along the outer peripheral edges of the peripheral wall 410. More specifically, each of the first areas 611 is an area where either the pillars 70 or the gas adsorbent 60 is/are adjacent to the peripheral wall 410. In this case, an area where either the pillars 70 or the gas adsorbent 60 is/are adjacent to the peripheral wall 410 and any of the slits 610 is adjacent to the peripheral wall 410 is supposed to be the second area 612. After the distinguishing process step has been performed, the placing process step is performed.

In this embodiment, the placing process step includes placing the clips 162 in the first areas 611 without placing the clips 162 in any of the second areas 612. Preventing the holder 62 from being placed in any of the second areas 612 may reduce the chances of the size of the slits 610 decreasing during the setting process step or a process step that follows the setting process step, thus allowing for having the evacuation done efficiently in the evacuating process step.

When the clips 162 are placed in the first areas 611, the clips 162 may be placed in all of the first areas 611. Alternatively, the first areas 611 may include first areas where the clips 162 are placed and first areas where no clips 162 are placed.

As for how to place the clips 1 on the assembly 100, the clips 1 may be placed in the same way as when the clips 1 are placed on the target 120 as described above and as shown in FIG. 5. When the clips 1 are placed on the assembly 100, the assembly 100 is clamped between the first member 4A and the second member 4B such that the first member 4A of the clip 1 is in contact with the first outer surface 2A of the first glass pane 200 and that the second member 4B of the clip 1 is in contact with the second outer surface 2B of the second glass pane 300 as shown in FIG. 12. When the second outer surface 2B is horizontal and faces downward in the placed state, the linking portion 8B is not located below the contact portion 6B of the second member 4B and a surface, facing downward, of the base portion 7B of the second member 4B is located above the second outer surface 2B. Also, a surface, facing away from the assembly 100 in the placed state, of the contact portion 6B of the second member 4B is a flat surface extending along the second outer surface 2B.

In addition, since the contact portion 6A of the first member 4A is angled, the first member 4A is out of contact with an outer peripheral edge of the first glass pane 200 in the placed state. Furthermore, since the recessed surface 63B of the contact portion 6B of the second member 4B is disposed under the outer peripheral edge of the second glass pane 300, the second member 4B is out of contact with the outer peripheral edge of the second glass pane 300. That is to say, the clip 1 is out of contact with the outer peripheral edges of the assembly 100.

In this embodiment, the carrying process step is performed to carry the assembly 100 before performing the next process step (i.e., the first melting process step (bonding process step)) that follows the placing process step. That is to say, the carrying process step is performed after the placing process step has been performed and before the bonding process step is performed.

The carrying process step includes carrying the assembly 100 in the placed state using the carrier 3. The carrier 3 carries the assembly 100 along the second outer surface 2B with the assembly 100 mounted on the carrier 3 such that the second outer surface 2B of the assembly 100 faces downward.

The carrier 3 may be a roller conveyor 31, for example. The roller conveyor 31 includes a plurality of rollers 32 which are driven in rotation in the same direction. The plurality of rollers 32 are arranged side by side at intervals in a direction perpendicular to the rotational shaft of the rollers 32. If the assembly 100 in the placed state is mounted on the roller conveyor 31 such that the second outer surface 2B thereof faces downward, then the second member 4B is arranged to face the rollers 32 over the rollers 32 while the assembly 100 is moving on the rollers 32. In this embodiment, however, the linking portion 8B of the second member 4B is not located below the contact portion 6B of the second member 4B and the surface 71B, facing downward, of the base portion 7B of the second member 4B is located above the second outer surface 2B as described above. This reduces the chances of the rollers 32 coming into contact with the base portion 7B and the linking portion 8B while the assembly 100 is being carried, thus reducing the chances of applying impact to the base portion 7B and the linking portion 8B. Also, the surface, facing away from the assembly 100 in the placed state, of the contact portion 6B of the second member 4B is a flat surface extending along the second outer surface 2B. This reduces the chances of, even when the rollers 32 come into contact with the contact portion 6B, applying impact from the rollers 32 to the contact portion 6B. Consequently, this reduces the chances of applying impact from the rollers 32 to the clip 1. This may reduce the chances of causing inconveniences such as deviation of the clip 1 from its original position with respect to the assembly 100 and fall of the clip 1 off the assembly 100. As a result, the clips 1 contributes to maintaining the relative positions of the first glass pane 200, the second glass pane 300, and the peripheral wall 410 in the assembly 100. The elastic force applied from the clips 1 to the first glass pane 200 and the second glass pane 300 causes moderate compressive force to be applied from the first glass pane 200 and the second glass pane 300 to the peripheral wall 410.

The outer peripheral end edge of the surface, facing away from the target 120 (the assembly 100) in the placed state, of the contact portion 6B of the first member 4A is preferably chamfered. This reduces the chances of the contact portion 6B being hooked on the carrier 3 while the contact portion 6B is being carried by the carrier 3 (such as the roller conveyor 31). This may further reduce the chances of the impact being applied from the carrier 3 to the clip 1.

Furthermore, even if impact is applied to the clip 1, the clip 1 will not come into contact with the outer peripheral edges of the assembly 100. This reduces the chances of the impact being applied to the easily damageable edges. Consequently, this may reduce the damage to be done to the assembly 100. Furthermore, the outer peripheral end edge of the surface, facing the target 120 in the placed state, of the contact portion 6B of the second member 4B is preferably chamfered. This may reduce the chances of, even when impact is applied to the clip 1, the target 120 (i.e., the second glass pane 300 of the assembly 100) being scratched by the end edges of the contact portion 6B.

In this embodiment, after the placing process step has been performed, the first melting process step (bonding process step), the evacuating process step, and the second melting process step (partition forming process step) are performed. These process steps are performed with the clips 1 placed on the assembly 100.

The first melting process step (bonding process step) is the process step of melting the peripheral wall 410 once to hermetically bond the first and second glass panes 200, 300 together with the peripheral wall 410. Specifically, the first glass pane 200 and the second glass pane 300 are loaded into a melting furnace and heated at a first melting temperature for a predetermined amount of time (first melting time). The first melting temperature and the first melting time are set such that the first glass pane 200 and the second glass pane 300 are hermetically bonded together with the peripheral wall 410 but that the air passages 600 are not closed with the partitions 420a-420j. That is to say, the lower limit of the first melting temperature is the softening point of the peripheral wall 410 but the upper limit of the first melting temperature is set such that the air passages 600 are not closed with the partitions 420a-420j. For example, if the softening point of the peripheral wall 410 and the partitions 420a-420j is 434°C, the first melting temperature is set at 440°C. The first melting time may be 10 minutes, for example. Also, in this first melting process step (bonding process step), the peripheral wall 410 softens too much to support the first glass pane 200 by itself anymore, and therefore, the first glass pane 200 is supported by the partitions 420a-420j instead.

This embodiment may reduce the chances of causing inconveniences such as the fall of the clip 1 off the assembly 100 during the carrying process step as described above, thus contributing to maintaining the relative positions of the first glass pane 200, the second glass pane 300, and the peripheral wall 410 in the assembly 100. This may improve the position accuracy of the constituent members of the glass panel unit 10. Furthermore, the elastic force applied from the clips 1 to the first glass pane 200 and the second glass pane 300 causes moderate compressive force to be applied from the first glass pane 200 and the second glass pane 300 to the peripheral wall 410. This allows the gap between the first glass pane 200 and the second glass pane 300 to be kept hermetically sealed while the first glass pane 200 and the second glass pane 300 are being bonded together with the peripheral wall 410.

The evacuating process step is the process step of evacuating the first spaces 510a-510f through the air passages 600, the second spaces 520a, 520b, and the evacuation port 700 and thereby turning the first spaces 510a-510f into vacuum spaces 50 (50a-50f). In other words, the vacuum spaces 50a-50f are the first spaces 510a-510f in vacuum condition. The evacuation may be carried out using a vacuum pump, for example. The vacuum pump may be connected to the assembly 100 via an exhaust pipe 830 and a sealing head 840. The exhaust pipe 830 may be bonded to the second glass pane 300 such that the inside of the exhaust pipe 830 and the evacuation port 700 communicate with each other, for example. Then, the sealing head 840 is attached to the exhaust pipe 830, thereby connecting a suction port of the vacuum pump to the evacuation port 700. The first melting process step (bonding process step), the evacuating process step, and the second melting process step (partition forming process step) are performed with the assembly 100 kept loaded in the melting furnace. Therefore, the exhaust pipe 830 is bonded to the second glass pane 300 at least before the first melting process step (bonding process step).

The evacuating process step includes evacuating the first spaces 510a-510f at a temperature equal to or higher than an evacuation temperature for a predetermined amount of time (evacuation time) via the air passages 600, the second spaces 520a, 520b, and the evacuation port 700 before the second melting process step (partition forming process step) is started. The evacuation temperature is set at a temperature higher than the activation temperature (e.g., 350°C) of the getter material of the gas adsorbents 60 but lower than the softening point (e.g., 434°C) of the partitions 420a-420j. The evacuation temperature may be 390°C, for example. This prevents the partitions 420a-420j from being deformed. In addition, this causes the getter material of the gas adsorbents 60 to be activated and also causes the molecules (gas) adsorbed onto the getter material to be released from the getter material. Then, the molecules (i.e., the gas) released from the getter material is exhausted through the first spaces 510a-510f, the air passages 600, the second spaces 520a, 520b, and the evacuation port 700. Thus, this evacuating process step allows the gas adsorbents 60 to recover their adsorption ability. The evacuation time is set to create vacuum spaces 50a-50f with a desired degree of vacuum (e.g., a degree of vacuum of 0.1 Pa or less). The evacuation time may be set at 120 minutes, for example.

The second melting process step (partition forming process step) is the process step of closing the air passages 600 by deforming the partitions 420a-420j to form the boundary walls 42a-42d and thereby obtain the work in progress 110. That is to say, the second melting process step (partition forming process step) includes closing the air passages 600 to form a plurality of frame members 40 surrounding the vacuum spaces 50a-50f, respectively. As a result, as shown in FIGS. 8 and 9, boundary walls 42a-42d are formed which hermetically separate the internal space 500 into the first spaces 510a-510f (vacuum spaces 50a-50f) and the second spaces 520a, 520b. In other words, the second melting process step (partition forming process step) is the process step of forming the boundary walls 42a-42d that hermetically separate the internal space 500 into the first spaces 510a-510f and the second spaces 520a, 520b by deforming the partitions 420a-420j to close the air passages 600. Note that in the second melting process step (partition forming process step), the partitions 420a-420j soften too much to support the first glass pane 200 by themselves anymore, and therefore, the first glass pane 200 is supported by the pillars 70 instead.

More specifically, melting the partitions 420a-420j once at a predetermined temperature (second melting temperature) equal to or higher than the softening point of the partitions 420a-420j causes the partitions 420a-420j to be deformed. Specifically, the first glass pane 200 and the second glass pane 300 are heated in the melting furnace at a second melting temperature for a predetermined amount of time (second melting time). The second melting temperature and the second melting time are set such that the partitions 420a-420j are softened to close the air passages 600. The lower limit of the second melting temperature is the softening point (e.g., 434°C) of the partitions 420a-420j. The second melting temperature may be set at 460°C, for example. Also, the second melting time may be 30 minutes, for example.

In addition, in the second melting process step (partition forming process step), the internal space 500 continues to be evacuated. That is to say, the second melting process step (partition forming process step) includes forming the boundary walls 42a-42d that close the air passages 600 by deforming the partitions 420a-420j at the second melting temperature while evacuating the first spaces 510a-510f via the air passages 600, the second spaces 520a, 520b, and the evacuation port 700. This further reduces the chances of the degree of vacuum in the vacuum spaces 50a-50f decreasing during the second melting process step (partition forming process step). Nevertheless, in the second melting process step (partition forming process step), the internal space 500 does not have to be evacuated continuously. Optionally, the second melting process step (partition forming process step) may also be the process step of closing all of the plurality of air passages 600 but at least the second slits 610b by deforming the partitions 420a-420j. That is to say, the second slits 610b do not have to be closed. Optionally, however, the second slits 610b may also be closed along with the other air passages 600.

After the air passages 600 have been closed through the second melting process step (partition forming process step), the chamber inside the melting furnace is cooled. This causes the partitions 420a-420j and the peripheral wall 410 to be solidified, thereby forming the boundary walls 42a-42d and the peripheral wall 41. Next, the gap between the contact portion 6A of the first member 4A and the contact portion 6B of the second member 4B is widened by having the user pinch the two operating portions 72A, 72B with his or her fingers, for example, to remove the clips 1 from the work in progress 110.

By performing these preparatory process steps, the work in progress 110 shown in FIGS. 8 and 9 is obtained. In the work in progress 110, the peripheral wall 410 and the partitions 420a-420j are once melted in the first melting process step (bonding process step) and the second melting process step (partition forming process step). Thus, the gap between the first and second glass panes 200, 300 is defined by the pillars 70, not the peripheral wall 410. That is to say, while being melted, the peripheral wall 410 is compressed between the first and second glass panes 200, 300, thus forming a peripheral wall 41 which has a smaller height and a broader width than the peripheral wall 410. That is to say, the peripheral wall 41 is the peripheral wall 410 that has been deformed through the second melting process step (partition forming process step). The respective sides 41a-41d of this peripheral wall 41 have a smaller height and a broader width than the respective sides 410a-410d of the peripheral wall 410. In the same way, the partitions 420a-420j being melted are also compressed between the first and second glass panes 200, 300, thereby forming boundary walls 42a-42d. That is to say, the boundary walls 42 (42a-42d) are partitions 420 (420a-420j) that have been deformed through the second melting process step (partition forming process step). These boundary walls 42a-42h have a smaller height and a broader width than the partitions 420a-420j. That is to say, the partitions 420a-420j are formed such that the boundary walls 42a-42d will have a broader width than the peripheral wall 410 that has gone through the sealing process step (i.e., the peripheral wall 41). Although the partitions 420a-420j and the peripheral wall 410 have different heights, the same core materials are dispersed in the first sealant and the second sealant. Thus, the peripheral wall 41 and the boundary walls 42a-42d to be formed out of the peripheral wall 410 and the partitions 420a-420j, respectively, will have the same height. This allows the frame members 40 to have a uniform height.

The removing process step is performed after the preparatory process steps have been performed. The removing process step is the step of obtaining glass panel units 10A-10F out of the work in progress 110. The removing process step is the step of obtaining glass panel units 10A-10F as parts including the first spaces (vacuum spaces 510a-510f), respectively, by removing a part 11A including the second space 520a and a part 11B including the second space 520b. That is to say, the removing process step includes cutting off the work in progress 110 into the glass panel units 10A-10F. In the work in progress 110, the glass panel units 10A-10F form integral parts thereof. Thus, the glass panel units 10A-10F are separated from each other by cutting off the work in progress 110.

For example, as shown in FIG. 8, the work in progress 110 (in particular, the first and second glass panes 200, 300) is cut off along cutting lines 910, 920, 930, 940 aligned with the boundary walls 42a-42d, respectively. Note that the cutting lines 910, 920, 930, 940 pass through the respective centerlines of the boundary walls 42a-42d. That is to say, each of the boundary walls 42a-42d is divided into two along the width thereof. In this embodiment, the boundary walls 42a-42d are formed out of the partitions 420a-420j. The partitions 420a-420j have a broader width than the respective sides 410a-410d of the peripheral wall 410. Thus, the boundary walls 42a-42d also have a broader width than the respective sides 410a-410d of the peripheral wall 410. This makes it easier to have the work of cutting the work in progress 110 done along the boundary walls 42a-42d. In particular, this reduces the chances of the boundary walls 42a-42d being damaged while being cut off to connect the vacuum spaces 50a-50f to the external space unintentionally and thereby cause a decrease in the degree of vacuum. This contributes to increasing the production yield. In addition, the width of the boundary walls 42a-42d is double the width of the respective sides 41a-41d of the peripheral wall 41. Thus, even if the frame members 40 include a part of the peripheral wall 41, the respective sides of the frame member 40 still have an equal width. This increases the strength of the frame member 40 as a whole.

Furthermore, in this embodiment, the plurality of spacers 70 are placed over the entire internal space 500 (i.e., in each of the first spaces 510a-510f and the second spaces 520a, 520b). This allows the stress applied to the first and second glass panes 200, 300 while the work in progress 110 is being cut off to be distributed uniformly by the plurality of spacers, thus reducing the chances of the first and second glass panes 200, 300 being damaged or causing cutting failures.

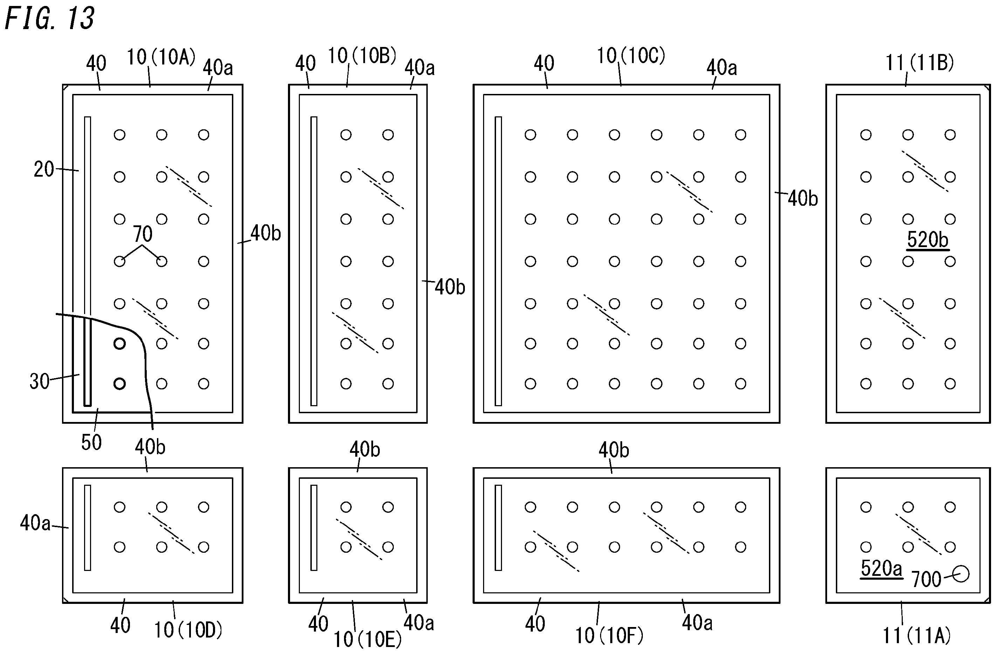

By performing the removing process step described above, glass panel units 10A-10F are obtained from the work in progress 110 as shown in FIG. 13. At this time, parts 11 (11A, 11B) including the second spaces 520a, 520b, respectively, are obtained but are not used.

### 2. Variations

The clip 1 according to the exemplary embodiment is formed as a combination of the first member 4A and the second member 4B that are two separate members and includes the elastic mechanism 5 including the torsion coil spring. Alternatively, the first member 4A and the second member 4B may form a single integral member. In addition, the elastic mechanism 5 does not have to include the torsion coil spring as long as the elastic mechanism 5 may apply elastic force to the first member 4A and the second member 4B to clamp the target 120 (the assembly 100).

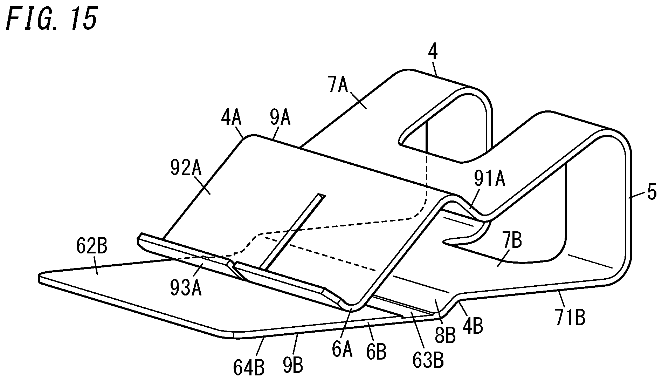

A clip 1 according to a variation is shown in FIGS. 14 and 15. In the following description of the clip 1 according to the variation, the first member 4A is also defined to be located upward of the second member 4B, and the second member 4B is also defined to be located downward of the first member 4A. In addition, in the placed state, the target 120 is also defined to be located forward of the elastic mechanism 5, and the elastic mechanism 5 is also defined to be located backward of the target 120. Furthermore, if the upward/downward and forward/backward directions for the observer are supposed to agree with the upward/downward and forward/backward directions in the foregoing description of the clip 1, then the rightward/leftward directions for the observer are defined to be the rightward/leftward directions in the following description of the clip 1. Note that the upward/downward, forward/backward, and rightward/leftward directions are defined as such only for the sake of convenience, not to define the orientation of the clip 1 when the clip 1 is used. Also, in the following description, the structure of the clip 1 to which no external force is applied will be described.

In the clip 1 according to this variation, the first member 4A, the second member 4B, and the elastic mechanism 5 form a single integral member which cannot be separated non-destructively.

The first member 4A includes: a base portion 7A linked to the elastic mechanism 5; and an action portion 9A located forward of the base portion 7A.

The base portion 7A has the shape of a flat plate which slopes down toward the front end thereof.

The action portion 9A includes: a first part 91A extending obliquely forward and upward from the front end of the base portion 7A; a second part 92A extending obliquely forward and downward from the front end of the first part 91A with respect to the first part 91A; and a third part 93A extending obliquely forward and upward from the front end of the second part 92A. Each of the first part 91A, the second part 92A, and the third part 93A has the shape of a flat plate. An angled portion linking the second part 92A to the third part 93A will be hereinafter referred to as the contact portion 6A.

The second member 4B of the clip 1 according to this variation has the same configuration as the second member 4B of the clip 1 according to the exemplary embodiment described above except that the second member 4B of the clip 1 according to this variation does not include the connecting portion 21B. That is to say, the second member 4B includes the action portion 9B including the contact portion 6B having the contact surface 62B and the recessed surface 63B and the linking portion 8B which has the same configuration as the counterpart of the exemplary embodiment described above. In addition, the second member 4B includes the base portion 7B having the same configuration as its counterpart of the exemplary embodiment described above except that the base portion 7B according to this variation does not include the connecting portion 21B.

The elastic mechanism 5 has the shape of a flat plate having thickness in the forward/backward direction. The upper end of the elastic mechanism 5 is connected to the rear end of the base portion 7A of the first member 4A. The lower end of the elastic mechanism 5 is connected to the rear end of the base portion 7B of the second member 4B. The base portion 7A of the first member 4A, the elastic mechanism 5, and the base portion 7B of the second member 4B may be formed by subjecting a single metallic plate to machining, for example.

When using the clip 1 according to this variation, the user applies force to the first member 4A and second member 4B of the clip 1 to separate the action portion 9A of the first member 4A and the action portion 9B of the second member 4B from each other. Applying this force causes the clip 1 to be deformed to the point of bringing the action portion 9A of the first member 4A out of contact with the action portion 9B of the second member 4B, thus creating a gap between the contact portion 6A of the first member 4A and the contact portion 6B of the second member 4B. The elastic force produced by the deformation of the clip 1 is applied from the elastic mechanism 5 to the first member 4A and the second member 4B. In this state, the outer peripheral edge of the target 120 (the assembly 100) is inserted into the gap between the action portion 9A of the first member 4A and the action portion 9B of the second member 4B. When the user removes the force that has been applied to the first member 4A and the second member 4B, the elastic force applied by the elastic mechanism 5 brings the action portion 9A of the first member 4A and the action portion 9B of the second member 4B closer to each other. This brings the contact portion 6A of the first member 4A and the contact portion 6B of the second member 4B into contact with the target 120 (the assembly 100). As a result, the target 120 (the assembly 100) is clamped between the contact portion 6A of the first member 4A and the contact portion 6B of the second member 4B. Consequently, the clip 1 is placed on the target 120. That is to say, the placed state is established.

In the exemplary embodiment described above, the glass panel unit 10 has a rectangular shape. Alternatively, the glass panel unit 10 may also have a circular, polygonal, or any other desired shape. That is to say, the first glass panel 20, the second glass panel 30, and the frame member 40 do not have to be rectangular but may also have a circular, polygonal, or any other desired shape. Note that the first glass pane 200, the second glass pane 300, the peripheral wall 410, and the partitions 420 do not have to have the shapes exemplified in the exemplary embodiment but may also have any other shapes as long as a glass panel unit 10 having the desired shape may be obtained. It should also be noted that the shape and dimensions of the glass panel unit 10 are determined according to the intended use of the glass panel unit 10.

The first and second glass panels 20, 30 do not have to have the same planar shape and the same planar dimensions. Also, the first glass panel 20 does not have to be as thick as the second glass panel 30, either. Furthermore, the first and second glass panels 20, 30 do not have to be made of the same material. The same statement applies to the first and second glass panes 200, 300 as well.

The frame member 40 does not have to have the same planar shape as the first and second glass panels 20, 30. Likewise, the peripheral wall 41, 410 does not have to have the same planar shape as the first and second glass panes 200, 300, either.

The first sealant of the peripheral wall 410 (peripheral wall 41) and the second sealant of the partitions 420a-420j (boundary walls 42a-42d) do not need to include the same core material but may include mutually different core materials. Furthermore, the first sealant may consist essentially of a hot glue. Likewise, the second sealant may also consist essentially of a hot glue.

The partitions 420 do not have to be the plurality of partitions 420a-420j. That is to say, the assembly 100 includes one or more partitions 420.

The partitions 420a-420j are not necessarily lower in height than the peripheral wall 410. Alternatively, the height of the partitions 420a-420j may be equal to or greater than, or equal to or less than, the height of the peripheral wall 410 (i.e., the height of the first to fourth sides 410a-410d thereof).

The partitions 420a-420j do not have to be wider than the peripheral wall 410. Also, the width of the partitions 420a-420j may be equal to or greater than, or equal to or less than, the width of the peripheral wall 410 (i.e., the width of the first to fourth sides 410a-410d thereof). Furthermore, the boundary walls 42a-42d do not have to be wider than the peripheral wall 41. Also, the width of the boundary walls 42a-42d may be equal to or greater than, or equal to or less than, the width of the peripheral wall 41 (i.e., the width of the first to fourth sides 41a-41d).

Also, in the assembly 100, the peripheral wall 410 is just provided between the first and second glass panes 200, 300 and does not bond the first and second glass panes 200, 300 together. Optionally, however, in the assembly 100 stage, the peripheral wall 410 may bond the first and second glass panes 200, 300 together. In short, in the assembly 100, the peripheral wall 410 only needs to be provided between the first and second glass panes 200, 300 and does not have to bond the first and second glass panes 200, 300 together.

Optionally, the assembly 100 and the work in progress 110 may be formed by using only the frame member 40 without providing any of the partitions 420. In that case, the glass panel unit 10 may be obtained by sealing the evacuation port 700 using a port sealing material instead of performing the second melting process step (i.e., the partition forming process step).

Furthermore, in the embodiment described above, the internal space 500 is partitioned into the plurality of first spaces 510a-510f and the plurality of second spaces 520a, 520b. Alternatively, the internal space 500 may be partitioned by the partitions into one or more first spaces and one or more second spaces.

In the embodiment described above, a melting furnace is used to heat the peripheral wall 410, the gas adsorbents 60, and the partitions 420a-420j. However, heating may be conducted by any appropriate heating means. The heating means may be a laser beam or a heat exchanger plate connected to a heat source, for example.

In the embodiment described above, the assembly 100 includes a plurality of air passages 600. However, the number of the air passages 600 provided may be one or more. If the number of the air passages 600 provided is one, then the air passage 600 is the slit 610 (610a).

In the embodiment described above, the evacuation port 700 is provided through the second glass pane 300. However, this is only an example and should not be construed as limiting. Alternatively, the evacuation port 700 may be provided through the first glass pane 200 or may also be provided through the peripheral wall 410 (peripheral wall 41). In short, the evacuation port 700 just needs to be provided to connect the second spaces 520a, 520b to the external space.

In the embodiment described above, a suction port of a vacuum pump is connected to the evacuation port 700 to evacuate the first space 510. Alternatively, the assembly 100 may be loaded in its entirety into a reduced pressure chamber to evacuate the entire assembly 100.

Furthermore, the getter material of the gas adsorbent 60 is an evaporative getter material in the embodiment described above. Alternatively, the getter material may also be a non-evaporative getter material.

In the embodiment described above, the gas adsorbent 60 has an elongate flat plate shape. However, the gas adsorbent 60 may also have any other shape. In addition, the gas adsorbent 60 does not have to be located at an end of the vacuum space 50. Furthermore, in the embodiment described above, the gas adsorbent 60 is formed by applying a liquid including a powder of a getter material (such as a dispersion liquid prepared by dispersing the powder of the getter material in a liquid or a solution prepared by dissolving the powder of the getter material in a liquid). However, this is only an example and should not be construed as limiting. Alternatively, the gas adsorbent 60 may include a substrate and a getter material adhered to the substrate. Such a gas adsorbent 60 may be obtained by immersing the substrate in a liquid including a powder of the getter material and drying the substrate. Note that the substrate may have any desired shape and may have an elongate rectangular shape, for example. Still alternatively, the gas adsorbent 60 may also be a film formed to cover the surface of the second glass pane 300 either entirely or only partially. Such a gas adsorbent 60 may be obtained by coating the surface of the second glass pane 300 with a liquid including a powder of the getter material. Yet alternatively, the gas adsorbent 60 may be included in the pillars 70. The pillars 70 including the gas adsorbent 60 may be obtained by making the pillars 70 of a material containing the getter material. Alternatively, the gas adsorbent 60 may even be a solid matter made of the getter material.

Furthermore, in the embodiment described above, the plurality of spacers 70 are arranged over the entire internal space 500 (i.e., in each of the first spaces 510a-510f and the second spaces 520a, 520b). However, the pillars 70 do not have to be arranged in the second spaces 520a, 520b. Furthermore, in the embodiment described above, each glass panel unit 10 includes a plurality of pillars 70. Alternatively, each glass panel unit 10 may include a single pillar 70. Still alternatively, the glass panel unit 10 may include no pillars 70 at all.

In the embodiment described above, the clip 1 placement areas 61 are spaced from each other at regular intervals with respect to one side of the peripheral wall 410. However, the clip 1 placement areas 61 do not have to be spaced from each other at regular intervals. That is to say, the interval between adjacent ones of the clip 1 placement areas 61 does not have to be constant. Furthermore, the positions at which the clip 1 placement areas 61 are set and the number of the clip 1 placement areas 61 may be changed randomly according to the shape and size of the assembly 100.

In the embodiment described above, the distinguishing process step is performed after the setting process step has been performed. Alternatively, the distinguishing process step may start to be performed in the middle of the setting process step.

In the embodiment described above, the first spaces (510a-510f) are vacuum spaces (50a-50f). However, the vacuum spaces (50a-50f) may be replaced with reduce pressure spaces. As used herein, the "reduced pressure spaces" refer to the first spaces (510a-510f) in a reduced pressure condition. The "reduced pressure condition" as used herein may be a condition in which the pressure is lower than the atmospheric pressure.

In the method for manufacturing the glass panel unit 10 according to the embodiment described above, the assembly 100 includes the partitions 420 that partition the internal space 500 into the first spaces 510 and the second spaces 520, and the partitions and the peripheral wall 410 are melted and solidified after the pressure inside the internal space 500 has been reduced. However, this is only an example and should not be construed as limiting. The assembly 100 does not have to include the partitions 420, the first spaces 510, and the second spaces 520. In addition, the specifics of the bonding process step do not have to be as described for the exemplary embodiment as long as the first and second glass panes 200, 300 may be bonded together with the peripheral wall 410.

If the internal space 500 is not partitioned into the first spaces 510 and the second spaces 520 in the assembly 100, then a through hole may be provided through at least one of the first glass pane 200 or the second glass pane 300, the internal space 500 may be evacuated through the through hole after the bonding process step has been performed to establish a reduced pressure condition in the internal space 500, and then the through hole may be sealed.

Alternatively, if the internal space 500 is not partitioned into the first spaces 510 and the second spaces 520 in the assembly 100, then the reduced pressure condition may be established in the internal space 500 by placing the assembly 100 in a reduced pressure space, and the peripheral wall 410 may be melted in such a condition and then solidified, thereby bonding the first glass pane 200 and the second glass pane 300 together with the peripheral wall 410.

In the embodiment described above, the bonding process step is performed after the carrying process step has been performed. Alternatively, the carrying process step may be performed at any time as long as the assembly 100 in the placed state may be carried. Optionally, by performing the carrying process step and the bonding process step in parallel, the first glass pane 200 and the second glass pane 300 may be bonded together with the peripheral wall 410 while the assembly 100 is being carried.

In the embodiment described above, the carrier 3 is the roller conveyor 31. Alternatively, a conveyor belt, a walking beam type carrier, a receiving pin type carrier, or a robot arm, for example, may also be used as long as the carrier 3 may carry the assembly 100 mounted thereon.

In the embodiment described above, the target 120 on which the clips 1 are placed is the assembly 100. Alternatively, the clips 1 may also be placed on a target 120 other than the assembly 100. In any case, the advantages of the present disclosure are achieved effectively as long as the target 120 has the shape of a plate and the clips 1 are placed on the outer peripheral edges of the target 120.

### 3. Configuration

A method for manufacturing a glass panel unit (10) according to a first aspect includes providing an assembly (100). The assembly (100) includes: a first glass pane (200); a second glass pane (300) facing the first glass pane (200); and a peripheral wall (410) interposed between the first glass pane (200) and the second glass pane (300) which is formed out of a sealant disposed in a frame shape. The first glass pane (200) has a first outer surface (2A) facing away from the second glass pane (300). The second glass pane (300) has a second outer surface (2B) facing away from the first glass pane (200). The method also includes placing a plurality of clips (1) along an outer peripheral edge of the assembly (100) to cause each of the plurality of clips (1) to clamp the assembly (100). The method further includes carrying the assembly (100) using a carrier (3) in a placed state where the plurality of clips (1) are placed on the assembly (100). The method further includes bonding the first glass pane (200) and the second glass pane (300) together with the peripheral wall (410). The carrier (3) carries the assembly (100) along the second outer surface (2B) with the assembly (100) mounted on the carrier (3) such that the second outer surface (2B) of the assembly (100) faces downward. Each of the plurality of clips (1) includes a first member (4A), a second member (4B), and an elastic mechanism (5). The assembly (100) is clamped, in the placed state, between the first member (4A) and the second member (4B) such that the first member (4A) is brought into contact with the first outer surface (2A) and that the second member (4B) is brought into contact with the second outer surface (2B). The elastic mechanism (5) applies elastic force to the first member (4A) and the second member (4B) to clamp the assembly (100). The second member (4B) includes: a contact portion (6B), at least part of which comes into contact with the second outer surface (2B) in the placed state; a base portion (7B) linked to the elastic mechanism (5); and a linking portion (8B) interposed between the contact portion (6B) and the base portion (7B) to link the contact portion (6B) and the base portion (7B) to each other. When the second outer surface (2B) is horizontal and faces downward in the placed state, the linking portion (8B) is not located below the contact portion (6B) and a surface (71B), facing downward, of the base portion (7B) is located above the second outer surface (2B).

This aspect may reduce the chances of causing inconveniences such as deviation of the clip (1) from its original position with respect to the assembly (100) as an intermediate product and fall of the clip (1) off the assembly (100) while the assembly (100) is being carried with the clip (1) placed on the assembly (100) during the manufacturing process of a glass panel unit (10).

In a second aspect, which may be implemented in conjunction with the first aspect, a surface (64B), facing away from the assembly (100) in the placed state, of the contact portion (6B) is a flat surface extending along the second outer surface (2B).

This aspect may further reduce the chances of causing inconveniences such as deviation of the clip (1) from its original position with respect to the assembly (100) and fall of the clip (1) off the assembly (100).

In a third aspect, which may be implemented in conjunction with the first or second aspect, when a contact surface (62B), coming into contact with the second outer surface (2B) in the placed state, of the contact portion (6B) is horizontal and faces upward, the linking portion (8B) is not located below the contact portion (6B) and the surface (71B), facing downward, of the base portion (7B) is located above the contact surface (62B) of the contact portion (6B).

This aspect may further reduce the chances of causing inconveniences such as deviation of the clip (1) from its original position with respect to the assembly (100) and fall of the clip (1) off the assembly (100).

In a fourth aspect, which may be implemented in conjunction with any one of the first to third aspects, in a state where the clips (1) are placed on the assembly (100), the first member (4A) is out of contact with an outer peripheral edge of the first glass pane (200) and the second member (4B) is out of contact with an outer peripheral edge of the second glass pane (300).

This aspect may reduce the damage to be done to the assembly (100) by the force applied from the clip (1).

A clip (1) according to a fifth aspect is placed on a target (120) by clamping the target (120). The clip (1) includes a first member (4A), a second member (4B), and an elastic mechanism (5). In a placed state where the clip (1) is placed on the target (120), the target (120) is clamped between the first member (4A) and the second member (4B). The elastic mechanism (5) applies elastic force to the first member (4A) and the second member (4B) to clamp the target (120). The second member (4B) includes: a contact portion (6B), at least part of which comes into contact with the target (120) in the placed state; a base portion (7B) linked to the elastic mechanism (5); and a linking portion (8B) interposed between the contact portion (6B) and the base portion (7B) to link the contact portion (6B) and the base portion (7B) to each other. When the contact surface (62B), coming into contact with the target (120) in the placed state, of the contact portion (6B) is horizontal and faces upward, the linking portion (8B) is not located below the contact portion (6B) and a surface (71B), facing downward, of the base portion (7B) is located above the contact surface (62B) of the contact portion (6B).

This aspect may reduce the chances of causing inconveniences such as deviation of the clip (1) from its original position with respect to the target (120) and fall of the clip (1) off the target (120) while the target (120) on which the clip (1) is placed is being carried.

In a sixth aspect, which may be implemented in conjunction with the fifth aspect, the target (120) is an assembly (100) including: a first glass pane (200); a second glass pane (300) facing the first glass pane (200); and a peripheral wall (410) interposed between the first glass pane (200) and the second glass pane (300) which is formed out of a sealant disposed in a frame shape. The first glass pane (200) has a first outer surface (2A) facing away from the second glass pane (300). The second glass pane (300) has a second outer surface (2B) facing away from the first glass pane (200).

This aspect may further reduce the chances of causing inconveniences such as deviation of the clip (1) from its original position with respect to the target (120) and fall of the clip (1) off the target (120) while the target (120) on which the clip (1) is placed is being carried.

### Reference Signs List

- 1: Clip
- 2A: First Outer Surface
- 2B: Second Outer Surface
- 3: Carrier
- 4A: First Member
- 4B: Second Member
- 5: Elastic Mechanism
- 6A: Contact Portion
- 6B: Contact Portion
- 62B: Contact Surface
- 64B: Surface
- 7A: Base Portion
- 7B: Base Portion
- 71B: Surface
- 8B: Linking Portion
- 10: Glass Panel Unit
- 100: Assembly
- 120: Target
- 200: First Glass Pane
- 300: Second Glass Pane
- 410: Peripheral Wall

## Claims

1. A method for manufacturing a glass panel unit, the method comprising:
providing an assembly, the assembly including: a first glass pane; a second glass pane facing the first glass pane; and a peripheral wall interposed between the first glass pane and the second glass pane which is formed out of a sealant disposed in a frame shape, the first glass pane having a first outer surface facing away from the second glass pane, the second glass pane having a second outer surface facing away from the first glass pane;
placing a plurality of clips along an outer peripheral edge of the assembly to cause each of the plurality of clips to clamp the assembly;
carrying the assembly using a carrier in a placed state where the plurality of clips are placed on the assembly; and
bonding the first glass pane and the second glass pane together with the peripheral wall,
the carrier being configured to carry the assembly along the second outer surface with the assembly mounted on the carrier such that the second outer surface of the assembly faces downward,
each of the plurality of clips including a first member, a second member, and an elastic mechanism,
the assembly being clamped, in the placed state, between the first member and the second member such that the first member is brought into contact with the first outer surface and that the second member is brought into contact with the second outer surface,
the elastic mechanism being configured to apply elastic force to the first member and the second member to clamp the assembly,
the second member including:
a contact portion, at least part of the contact portion being configured to come into contact with the second outer surface in the placed state;
a base portion linked to the elastic mechanism; and
a linking portion interposed between the contact portion and the base portion to link the contact portion and the base portion to each other, and
the linking portion being not located below the contact portion and a surface, facing downward, of the base portion being located above the second outer surface when the second outer surface is horizontal and faces downward in the placed state.

2. The method of claim 1, wherein
a surface, facing away from the assembly in the placed state, of the contact portion is a flat surface extending along the second outer surface.

3. The method of claim 1 or 2, wherein
when a contact surface, configured to come into contact with the second outer surface in the placed state, of the contact portion is horizontal and faces upward, the linking portion is not located below the contact portion and the surface, facing downward, of the base portion is located above the contact surface of the contact portion.

4. The method of any one of claims 1 to 3, wherein
in a state where the clips are placed on the assembly, the first member is configured to be out of contact with an outer peripheral edge of the first glass pane and the second member is configured to be out of contact with an outer peripheral edge of the second glass pane.

5. A clip configured to be placed on a target by clamping the target,
the clip including a first member, a second member, and an elastic mechanism,
the target being clamped between the first member and the second member in a placed state where the clip is placed on the target,
the elastic mechanism being configured to apply elastic force to the first member and the second member to clamp the target,
the second member including:
a contact portion, at least part of the contact portion being configured to come into contact with the target in the placed state;
a base portion linked to the elastic mechanism; and
a linking portion interposed between the contact portion and the base portion to link the contact portion and the base portion to each other, and
the linking portion being not located below the contact portion and a surface, facing downward, of the base portion being located above the contact surface of the contact portion when the contact surface, configured to come into contact with the target in the placed state, of the contact portion is horizontal and faces upward.

6. The clip of claim 5, wherein
the target is an assembly including: a first glass pane; a second glass pane facing the first glass pane; and a thermally meltable sealant interposed between the first glass pane and the second glass pane which is disposed in a frame shape, the first glass pane having a first outer surface facing away from the second glass pane, the second glass pane having a second outer surface facing away from the first glass pane.
